# EUROPEAN PATENT APPLICATION

(11) **EP 4 831 892 A1**
(43) Date of publication of application: **28.10.2026**
(21) Application number: 26166759.6
(22) Date of filing: 23.03.2026
(51) Int. Cl.: G06Q 20/38, G06N 3/045, G06N 20/00, G06Q 40/02, G06Q 40/12

(54) **METHOD AND SYSTEM FOR PERFORMING BACKUP VALIDATION FOR ENTERPRISES**

(30) Priority: 22.04.2025 US 202519186011
(71) Applicant: Accenture Global Solutions Limited, Dublin 4 (IE)
(72) Inventor: GHATAGE, Prakash, 560062 Bengaluru (IN); SAMPAT, Nirav Jagdish, 400062 Mumbai (IN); PRASAD, Sreevidya, 560102 Bangalore (IN); SUNDARAKRISHNAN, Sattish, 560043 Bangalore (IN); KATIYAR, Harsh Kumar, 560076 Bangalore (IN); BIRLA, Kapil, 201301 Noida (IN); DORAISWAMY, Kumaran, 600126 CHENNAI (IN); RAMASWAMY RAMASESHAN, Panayur, 600041 Chennai (IN); GOYEL, Rajat, 121002 Faridabad (IN); SINGHAL, Prakhar B., 122002 Gurgaon (IN); THYAGARAJAN, Anandi, 110076 New Delhi (IN); SIRCAR, Rudra, 700156 Newtown Kolkata (IN)
(74) Representative: Müller-Boré & Partner Patentanwälte PartG mbB

(57) **Abstract**

Method, system, and computer-readable storage media for performing backup validation for enterprises are disclosed. Input data file corresponding to transactions of enterprise is received from one or more data sources. File type of input data file is identified based on rule-based model and generative artificial intelligence-based file type model. Entities are extracted from file type based on rule-based model and artificial intelligence-based entities model. Transaction event corresponding to entities is identified by mapping entities with entity comprised in pre-stored file using artificial intelligence-based matching model. Transaction event is validated based on user feedback and/or generative artificial intelligence -based validation model. Change in transaction event, entities, and/or file type is determined based on results of validation. Transaction event, entities, and/or file type is modified based on change. Modified transaction event corresponding to input data file is outputted on user interface of user device.

## Description

### TECHNICAL FIELD

Various examples described herein relate generally to a method, a system, and a computer program product for performing backup validation for enterprises.

### BACKGROUND

Backup validation is part of a Record-To-Report (RTR) process, which verifies each financial transaction with supported or appropriate backup documents. The backup validation involves ensuring that the backup documents such as receipts, invoices, contracts, and other relevant documents align with transaction details, confirming accuracy and compliance of the backup documents with financial regulations, thereby preventing errors, fraud, and discrepancies in financial reporting. For enterprises, the backup validation is required for maintaining compliance with internal controls, regulatory standards, and financial auditing requirements. With the increase in usage of digital technologies, large volumes of documents may be generated for validation. Therefore, the enterprises may employ backup validation systems for backup validation of documents.

Some of the backup validation systems may use Artificial Intelligence (AI) models or Machine Learning (ML) models for performing the backup validation by reviewing and matching supporting documents to ensure that the supporting documents match details of corresponding transactions. However, these backup validation systems may have limitations in training of the AI and ML models, as the AI and ML models require extensive training data to account for different document formats, transaction types, and/or validation rules. Even with the extensive training data, the AI and the ML models may still produce inaccurate results, while requiring manual effort to validate and/or correct outputs of the backup validation. Therefore, these backup validation systems may expend a significant amount of time, human resources, and computing resources (e.g., processing resources, memory resources, communication resources, and/or the like) for performing the backup validation, which may be less efficient or inaccurate.

### SUMMARY

In an aspect, the present disclosure relates to a system including a processor, and a memory coupled to the processor, wherein the memory includes processor-executable instructions, which on execution, cause the processor to receive at least one input data file corresponding to a plurality of transactions of an enterprise from a plurality of data sources, identify a file type of the received at least one input data file based on at least one of a rule-based model and a Gen AI-based file type model, extract a plurality of entities from the identified file type based on at least one of the rule-based model and a Gen AI-based entities model, identify a transaction event corresponding to the extracted plurality of entities by mapping the extracted plurality of entities with at least one entity included in a pre-stored file using an AI-based matching model, validate the identified transaction event based on at least one of user feedback and the Gen AI-based validation model, determine a change in at least one of the identified transaction event, the extracted plurality of entities, and the identified file type based on results of validation, modify at least one of the identified transaction event, the extracted plurality of entities, and the identified file type based on the determined change, and output the modified transaction event corresponding to the received at least one input data file on a user interface of a user device.

In another aspect, the present disclosure relates to a method including receiving, by a processor, at least one input data file corresponding to a plurality of transactions of an enterprise from a plurality of data sources, identifying, by the processor, a file type of the received at least one input data file based on at least one of a rule-based model and a Gen AI-based file type model, extracting, by the processor, a plurality of entities from the identified file type based on at least one of the rule-based model and a Gen AI-based entities model, identifying, by the processor, a transaction event corresponding to the extracted plurality of entities by mapping the extracted plurality of entities with at least one entity included in a pre-stored file using an AI-based matching model, validating, by the processor, the identified transaction event based on at least one of user feedback and the Gen AI-based validation model, determining, by the processor, a change in at least one of the identified transaction event, the extracted plurality of entities, and the identified file type based on results of validation, modifying, by the processor, at least one of the identified transaction event, the extracted plurality of entities, and the identified file type based on the determined change, and outputting, by the processor, the modified transaction event corresponding to the received at least one input data file on a user interface of a user device.

In another aspect, the present disclosure relates to a non-transitory computer readable medium including machine-executable instructions that may be executable by a processor to perform the method as discussed herein.

It is appreciated that method in accordance with the present disclosure can include any combination of the aspects and features described herein. That is, the method in accordance with the present disclosure is not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings, and from the claims.

### BRIEF DESCRIPTION OF THE DRAWINGS

Various examples in accordance with the present disclosure will be described with reference to the drawings, in which:
FIG. 1 illustrates an example environment used to execute implementations of the present disclosure.
FIG. 2 illustrates a block diagram depicting a backup validation engine and components coupled to the backup validation engine for performing the backup validation, in accordance with implementations of the present disclosure.
FIG. 3 illustrates an example architecture of a backup validation engine in a memory of a backup validation system disclosed in the example environment of FIG. 1, for backup validation for enterprises, in accordance with implementations of the present disclosure.
FIG. 4 illustrates an example process flow of backup validation for enterprises, in accordance with implementations of the present disclosure.
FIG. 5 illustrates a flow diagram that presents an example computer implemented method for backup validation of enterprises, in accordance with implementations of the present disclosure.
FIG. 6A illustrates an example illustration of identifying a file type of an input data file, in accordance with implementations of the present disclosure.
FIG. 6B illustrates an example common data format, in accordance with implementations of the present disclosure.
FIG. 7 depicts a flow diagram that presents an example computer implemented method for identifying a file type of an input data file, in accordance with implementations of the present disclosure.
FIG. 8 depicts an example illustration of extracting entities using an entity extraction module, in accordance with implementations of the present disclosure.
FIG. 9 depicts an example illustration of generating a Generative Artificial Intelligence (Gen AI) prompt dynamically, in accordance with implementations of the present disclosure.
FIG. 10 illustrates a flow diagram that presents an example computer implemented method for extracting entities from an input data file, in accordance with implementations of the present disclosure.
FIG. 11 depicts an example illustration of performing matching between line items of a ledger and input data files, in accordance with implementations of the present disclosure.
FIG. 12 depicts an example illustration of training of a Descriptive Neural Network (DNN) model, in accordance with implementations of the present disclosure.
FIG. 13 illustrates an example process of training, testing, and deploying a DNN model, in accordance with implementations of the present disclosure.
FIG. 14 depicts an example illustration of continuous learning of a DNN model in real-time, in accordance with implementations of the present disclosure.
FIG. 15 illustrates an exemplary flow diagram that presents a computer implemented method for identifying a transaction event corresponding to extracted entities, in accordance with implementations of the present disclosure.
FIG. 16 illustrates another exemplary flow diagram that presents a computer implemented method for identifying a transaction event corresponding to extracted entities, in accordance with implementations of the present disclosure.
FIG. 17 illustrates a flow diagram that presents an example computer implemented method for generating an AI-based matching model, in accordance with implementations of the present disclosure.
FIG. 18 depicts an example illustration of validating ledger entries against corresponding input data files by providing an interactive interface for comparison, in accordance with implementations of the present disclosure.
FIG. 19 illustrates a flow diagram that presents an example computer implemented method for validating the identified transaction event corresponding to the entities, in accordance with implementations of the present disclosure.
FIG. 20 illustrates a flow diagram that presents an example computer implemented method for determining a change in an identified transaction event, in accordance with implementations of the present disclosure.
FIG. 21 depicts an example illustration of collecting telemetry data using a logging system, in accordance with implementations of the present disclosure.
FIG. 22 illustrates an example computer system to implement the backup validation system disclosed in the example environment of FIG. 1, in accordance with implementations of the present disclosure.

Like reference numbers and designations in the various drawings indicate like elements.

### DETAILED DESCRIPTION

In the following description, various examples will be illustrated by way of example and not by way of limitation in the figures of the accompanying drawings. References to various examples in this disclosure are not necessarily to the same example, and such references mean at least one. While specific implementations and other details are discussed, it is to be understood that this is done for illustrative purposes only. A person skilled in the relevant art will recognize that other components and configurations may be used without departing from the scope and spirit of the claimed subject matter.

Reference to any "example" herein (e.g., "for example," "an example of," by way of example," or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term. Likewise, the disclosure is not limited to various examples given in this specification.

Without intent to limit the scope of the disclosure, examples of instruments, apparatus, methods, and their related results according to the examples of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

The term "comprising" when utilized means "including, but not necessarily limited to"; it specifically indicates open-ended inclusion or membership in the so-described combination, group, series, and the like.

The term "a" means "one or more" unless the context clearly indicates a single element.

"First," "second," etc., are labels to distinguish components or blocks of otherwise similar names but does not imply any sequence or numerical limitation.

"And/or" for two possibilities means either or both of the stated possibilities ("A and/or B" covers A alone, B alone, or both A and B take together), and when present with three or more stated possibilities means any individual possibility alone, all possibilities taken together, or some combination of possibilities that is less than all of the possibilities. The language in the format "at least one of A ... and N" where A through N are possibilities means "and/or" for the stated possibilities (e.g., at least one A, at least one N, at least one A and at least one N, etc.).

It should also be noted that in some alternative implementations, the functions/acts noted may occur out of the order noted in the figures. For example, two steps disclosed or shown in succession may in fact be executed substantially concurrently or may sometimes be executed in the reverse order, depending upon the functionality/acts involved.

Specific details are provided in the following description to provide a thorough understanding of examples. However, it will be understood by one of ordinary skill in the art that examples may be practiced without these specific details. For example, systems may be shown in block diagrams so as not to obscure the examples in unnecessary detail. In other instances, well-known processes, structures, and techniques may be shown without unnecessary detail in order to avoid obscuring example examples.

The specification and drawings are to be regarded in an illustrative rather than a restrictive sense. It will, however, be evident that various modifications and changes may be made thereunto without departing from the broader spirit and scope as set forth in the claims.

Implementations of the present disclosure provide a method that effectively automates the backup validation for enterprises by leveraging Generative AI (Gen AI)-based models, Optical Character Recognition (OCR), AI matching, and/or the like. The method uses the Gen AI-based models to identify and extract key values/entities from documents in standardized text formats, ensuring accurate data extraction across various document types. The method uses OCR and conversion engines to standardize the documents, making the documents compatible with AI models. The method uses AI matching to compare extracted values with the corresponding transaction data, with confidence scoring to automate the backup validation when accuracy of the AI exceeds a threshold (e.g., 95%, 98%, 92%, or the like). For transactions with lower confidence, the method provides an advanced user interface for the accountants or the financial teams to review and approve results of matching. The method may reduce time and effort required for manual validation, enhance accuracy, and eliminate a need for continuous AI retraining, thereby leading to cost savings in digital storage, compute resources, and AI expertise.

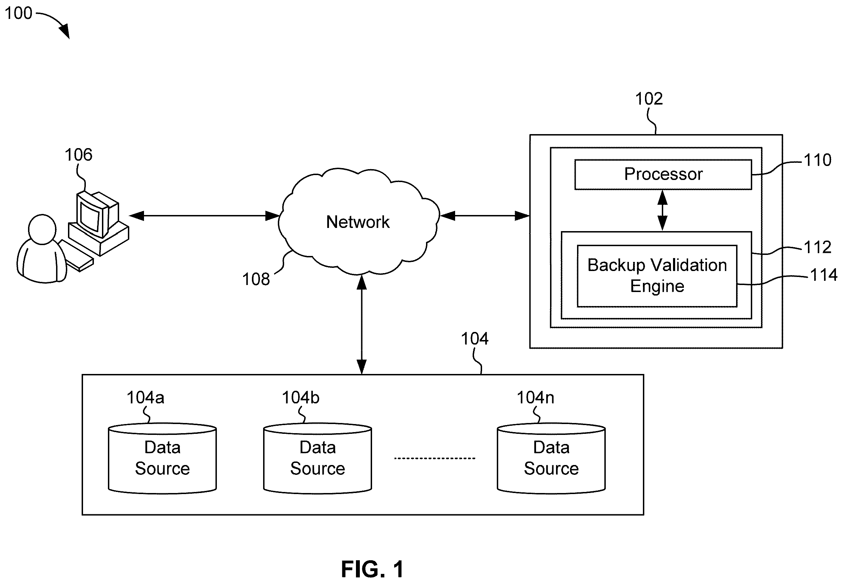

FIG. 1 illustrates an example environment 100 used to execute implementations of the present disclosure. In some examples, the example environment 100 enables automatic backup validation for enterprises. The backup validation may include verifying of transactions in real-time, performing periodic test restores, and generating alerts for any failures, ensuring reliable disaster recovery and compliance with enterprise standards. Examples of the enterprises include, but are not limited to, a technology enterprise, a retail enterprise, a financial enterprise, a manufacturing enterprise, a telecommunication enterprise, an energy enterprise, and/or the like.

As depicted in FIG. 1, the example environment 100 includes a backup validation system 102, data sources 104a-104n, a user device 106, and a network 108. For brevity, only one user device and one backup validation system are depicted in FIG. 1. However, in some implementations, the environment 100 may include multiple user devices or backup validation systems. In some examples, the backup validation system 102 may be implemented as an on-premises system that is operated by an organization or a third-party engaged in cross-platform interactions and data management. In some examples, the backup validation system 102 may be implemented as an off-premises system (for example, a cloud or an on-demand system) that is operated by an organization or a third-party on behalf of the organization. In some examples, the backup validation system 102 may be implemented in a cloud environment. For simplicity, the backup validation system 102 depicted in FIG. 1 may be a cloud environment that is intended to represent various forms of servers including a web server, an application server, a proxy server, a network server, a server pool, and/or the like. In some examples, the backup validation system 102 may include, but are not limited to a server, a back-end system, a desktop, a laptop, a notebook, a tablet, a smartphone, a mobile phone, an application server, and/or the like.

The backup validation system 102 may interact with the data sources 104a-104n and the user device 106 via the network 108. The network 108 may correspond to a communication network. Examples of the network 108 may include, but are not limited to, a Local Area Network (LAN), a Wide Area Network (WAN), the Internet, Wi-Fi, Long Term Evolution (LTE), Worldwide Interoperability for Microwave Access (WiMAX), General Packet Radio Services (GPRS), or a combination thereof. In some examples, the network 108 may be accessed over a wired and/or a wireless communication link.

The data sources 104a-104n may be collectively referenced hereinafter as data sources 104 (also be referenced to as databases). Examples of the data sources 104 may include enterprise application, databases, servers, cloud platforms, transaction logs, backup repositories, Customer Relationship Management (CRM) systems, websites, service history databases, monitoring tools, a help desk software, customer support platforms, management systems, and/or the like. The data sources 104 may act as a repository for storing one or more input data files corresponding to each of a transaction, and/or data associated with ledgers (e.g., ledger data). The one or more input data files include backup files that store structured or unstructured information such as financial records, transaction logs, customer data, or the like. Further, the transaction refers to a specific event or activity, involving an exchange of goods, services, or financial data, that result in changes to a state or a record. The transaction is recorded in the one or more data files for further analysis or processing. Examples of the ledger data may be data files, financial records, and/or transactional logs.

Further, the user device 106 is used by a user to log into and interact with computing platforms being provided by the backup validation system 102. A computing platform may execute applications according to implementations of the present disclosure. The user may an administrator, an accountant, or a financial team member. Examples of the user device 106 may include a server, a notebook, a desktop, a netbook, smartphones, laptops, a tablet, and/or voice-enabled devices. It is contemplated that implementations of the present disclosure may be realized with any appropriate type of user device. In some examples, the user device 106 may include a web browser application executed thereon, which may be used to display one or more web pages of the computing platform executing applications. In some examples, the user device 106 may display one or more Graphical User Interfaces (GUIs) that enable the user to interact with the computing platforms.

By way of an example, the user may use the user device 106 to provide a user input to the backup validation system 102 and/or receive an output from the backup validation system 102. The user input may include, but is not limited to, a backup validation request, a test restore command, user feedback, and/or alert configuration. The output may include, but is not limited to, backup validations results, modified transaction events, test restore results, and/or alert notifications.

The backup validation system 102 includes a processor 110 and a memory 112. In some implementations, the backup validation system 102 includes more than one processor. The processor 110 may include, for example, microprocessors, microcomputers, microcontrollers, digital signal processors, central processing units, state machines, logic circuits, and/or any devices that manipulate data or signals based on operational instructions. The memory 112 may be a non-volatile memory or a volatile memory. Examples of the non-volatile memory may include, but are not limited to, a flash memory, a Read Only Memory (ROM), a Programmable ROM (PROM), Erasable PROM (EPROM), and Electrically EPROM (EEPROM) memory. Examples of the volatile memory may include, but are not limited, a Dynamic Random Access Memory (DRAM), and a Static Random-Access Memory (SRAM).

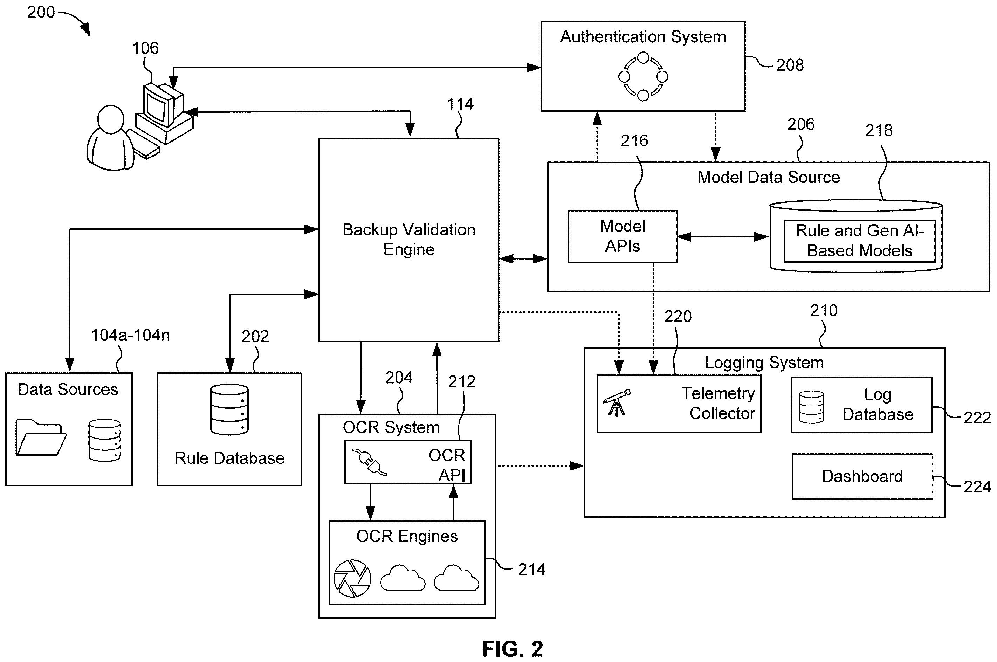

The memory 112 may be communicatively coupled to the processor 110. The memory 112 stores a backup validation engine 114. The backup validation engine 114 may be stored as a downloadable library including various instructions. The backup validation engine 114 may be executed by the processor 110 for backup validation. The backup validation may include various operations such as receiving the input data files from the data sources 104, identifying a file type associated with each of the input data files, extracting entities from the input data files, identifying transaction events corresponding to the extracted entities, validating the identified transaction events, identifying changes in the transaction events, modifying the transaction events, outputting the transaction events, and/or the like. The operations of the backup validation engine 114 are described further in detail in conjunction with FIGS. 2-3 in the present disclosure. The memory 112 may also store various data (e.g., user inputs, the transaction events, the entities, results of the validation, and/or the like) that may be captured, processed, and/or required by the backup validation system 102. Various examples of performing backup validation for the enterprises are described in conjunction with FIGS. 2-22.

FIG. 2 is a block diagram 200 depicting the backup validation engine 114 and components coupled to the backup validation engine 114 for performing the backup validation, in accordance with implementations of the present disclosure. FIG. 2 is explained in conjunction with FIG. 1. As depicted in FIG. 2, the backup validation engine 114 may be communicatively coupled to the data sources 104a-104n, a rule database 202, an Optical Character Recognition (OCR) system 204, a model data source 206, an authentication system 208, and a logging system 210.

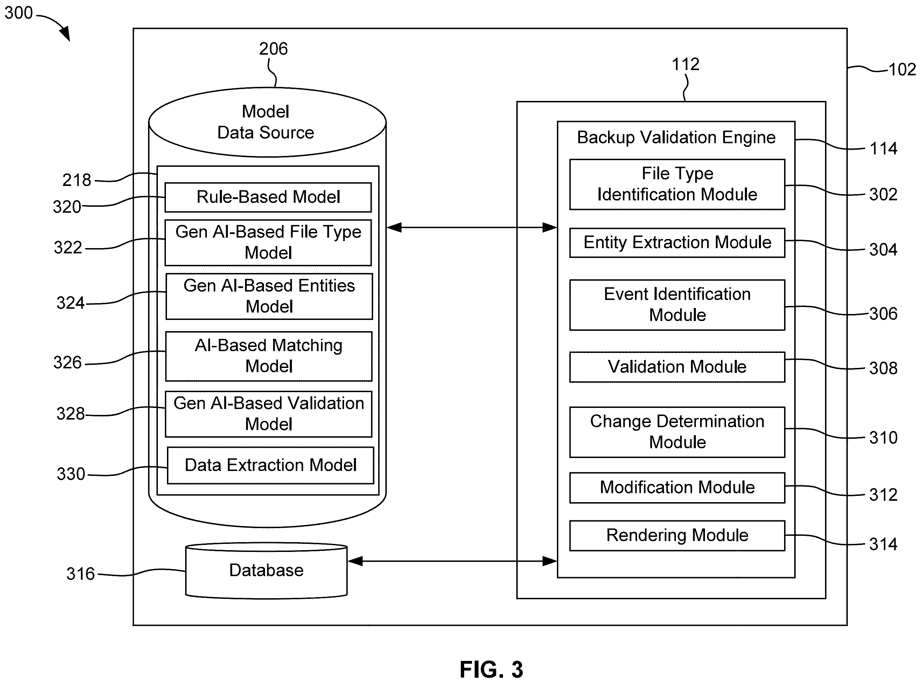

The backup validation engine 114 may receive an input data file corresponding to each of transactions of an enterprise from the data sources 104. The backup validation engine 114 may perform the backup validation of the received input data file corresponding to each of the transactions. The backup validation engine 114 may receive predefined matching rules from the rule database 202 and use the predefined matching rules to perform the backup validation. The backup validation performed according to the present disclosure by the backup validation engine 114 is described in detail in conjunction with FIG. 3.

The backup validation engine 114 may perform file digitalization using the OCR system 204. As a non-limiting example, the OCR system 204 may include OCR Application Programming Interfaces (APIs) 212 and OCR engines 214 hosted on cloud platforms. The backup validation engine 114 accesses the OCR engines 214 through the OCR APIs 212 for performing the file digitalization. The file digitalization may include converting file format of the input data file into a common data format. The input data file may include non-digital and/or image-based files. For example, if the input data file includes scanned images and/or other non-digital formats, the backup validation engine 114 may access and use the OCR engines 214 through the OCR APIs 212 to convert the scanned images and/or other non-digital formats into the common data format, for example, a machine-readable format.

The backup validation engine 114 may use the model data source 206 to perform the backup validation. The model data source 206 includes model APIs 216, and rule and Gen AI-based models 218. The backup validation engine 114 may access the rule and Gen AI-based models 218 through the respective model APIs 216 to perform the backup validation, which is described in detail in conjunction with FIG. 3.

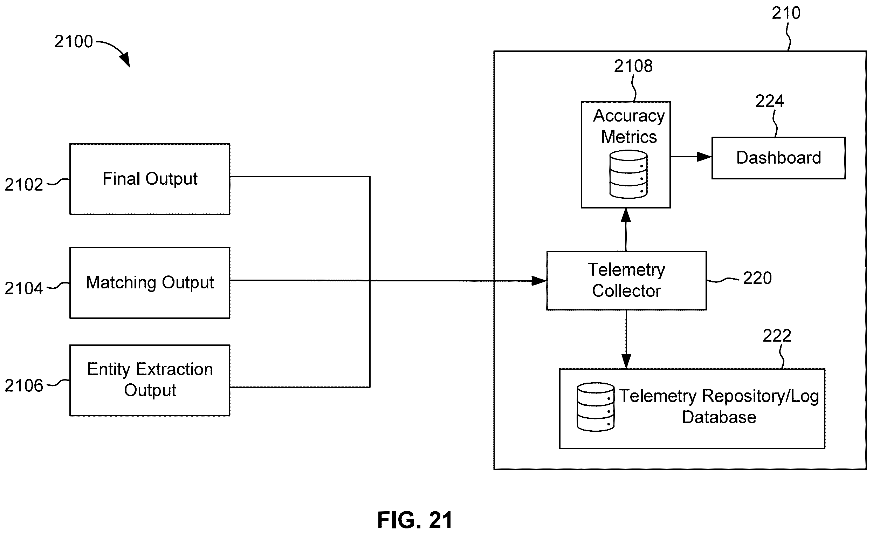

All actions and events occurring within the backup validation system 102 are tracked by the logging system 210, which is responsible for monitoring performance and collecting real-time data (e.g., user feedback, a matching output, entity extraction output, processing time, error rates, event triggers, resource usage, transaction volume, and/or the like, as described further in conjunction with FIG. 3) for analysis. The logging system 210 includes a telemetry collector 220 (which is explained in detail in FIG. 21), which logs the real-time data of the backup validation system 102, a log database 222, which stores logs for future analysis and troubleshooting, and a dashboard 224 (as explained in detail in FIG. 21). The logs provide valuable insights into performance of the backup validation system 102, enabling improvements and issue resolution. The logging system 210 is explained in detail in conjunction with FIG. 21.

The backup validation engine 114 may process the input data file and perform various operations on the input data file using the OCR system 204, and the model data source 206 of the backup validation, which are explained in detail in FIG. 3.

Further, the backup validation engine 114 sends data resultant from the backup validation (e.g., processed data) to the user device 106 for user review. For example, the processed data may include matching output or transaction event matches. The user device 106 allows users to interact with the processed data, validate the transaction events, and make any necessary corrections if the matching output generated by the backup validation engine 114 is inaccurate and requires manual adjustments. The user device 106 is communicatively coupled to the authentication system 208, which is responsible for controlling access and verifying identity of the users. The authentication system 208 ensures that only authorized users are allowed to interact with the processed data.

When a user attempts to access the backup validation system 102, the user device 106 sends an Identity (ID), a secret (e.g., a password, an API key, a token, or the like), and a scope (e.g., a permission or access level) to the authentication system 208 for validation. The authentication system 208 generates an authentication token (e.g., an AUTH Token), along with a timestamp, to authenticate the user and ensure that the user has proper credentials. The authentication system 208 then communicates with the model data source 206, transmitting the AUTH token to verify the identity of the user. The validation process occurs securely over protocols. Once the token is validated, the user is granted access to the backup validation system 102 and may proceed with interacting with the processed data.

FIG. 3 illustrates an example architecture 300 of the backup validation engine 114 in the memory 112 of the backup validation system 102 disclosed in the example environment of FIG. 1, for backup validation for enterprises, in accordance with implementations of the present disclosure. FIG. 3 is explained in conjunction with FIGS. 1 and 2. As depicted in FIG. 3, To perform various operations of the backup validation, the backup validation engine 114 may include various modules including a file type identification module 302, an entity extraction module 304, an event identification module 306, a validation module 308, a change determination module 310, a modification module 312, and a rendering module 314.

The backup validation engine 114 may be communicatively coupled to a database 316 for storing various data and/or intermediate results generated by the modules 302-314 of the backup validation engine 114. The backup validation engine 114 may store or extract the various data and/or intermediate results from the database 316 as required. The backup validation engine 114 may also be communicatively coupled to the model data source 206 (e.g., via the network 108). The model data source 206 may include the rule and Gen AI-based models 218. The rule and Gen AI-based models 218 may include a rule-based model 320, a Generative Artificial Intelligence (Gen AI) based file type model 322, a Gen AI-based entities model 324, an AI-based matching model 326, a Gen AI-based validation model 328, and a data extraction model 330. In some examples, such models 320-326 may include one of: a Large Language Model (LLM), an AI model, an ML model, and/or the like. The modules 302-314 of the backup validation engine 114 may use the model data source 206 to perform one or more operations.

The file type identification module 302 may receive an input data file corresponding to transactions of an enterprise from the data sources 104. For example, the input data file may include an invoice in formats such as Portable Document Format (PDF), Excel, and/or image scans, which includes details like item descriptions, quantities, and/or prices. The input data file may include receipts often found as scanned images or PDFs, and include transaction details such as store names, items purchased, and/or amounts paid. The input data file may include bank statements, which may be in PDF and/or Excel formats and include transaction records, balances, and/or details related to bank accounts. Additionally, the input data file may include purchase orders, in PDF, Word, and/or Excel format, which list items, quantities, and/or suppliers. Moreover, the input data file may include expense reports in Excel and/or PDF formats, detailing various enterprise expenses like travel and office supplies. The input data file may include contracts and/or agreements, including scanned and/or digital versions of legal documents such as signed contracts. Furthermore, the input data file may include shipping and delivery receipts in PDF and/or scanned image formats, which include tracking numbers, addresses, and/or itemized lists of goods. Also, the input data file may include payroll files in Excel and/or PDF format, detailing employee salaries, deductions, and/or payment periods. The file type identification module 302 is capable of handling diverse types of input data files, in various formats like PDF, Excel, and/or image files.

Further, the file type identification module 302 may identify a file type of the input data file. For example, the file type identified may include, but is not limited to, receipts, invoices, bank statements, purchase orders, expense reports, contracts, shipping documents, and/or payroll files. The file type identification module 302 may use the rule-based model 320 and/ or the Gen AI-based file type model 322 to identify the file type of the input data file. The rule-based model 320 may use predefined rules and/or patterns, such as file extensions, structure, and/or specific markers, to identify the file type of the input data file. The rule-based model 320 may apply logics based on known file formats to ensure faster and deterministic classifications of the input data file. The Gen AI-based file type model 322 may be used to analyze content of the input data file, detect complex patterns and/or context that may not be captured by the predefined rules. The Gen AI-based file type model 322 is capable of identifying file types by analyzing data at a deeper, contextual level.

In detail, for identifying the file type of the input data file, the file type identification module 302 may identify a file format associated with the received input data file based on a file extension (e.g., .pdf, .jpg, .xlsx) and using a data extraction model 330. The identification involves examining the file extension (e.g., .pdf, .jpg, xlsx) of the input data file, which serves as an initial indicator of the file type. Utilizing the file extension, the file type identification module 302 employs the data extraction model 330 to analyze structure and content of the input data file, to analyze contents of the input data file thoroughly.

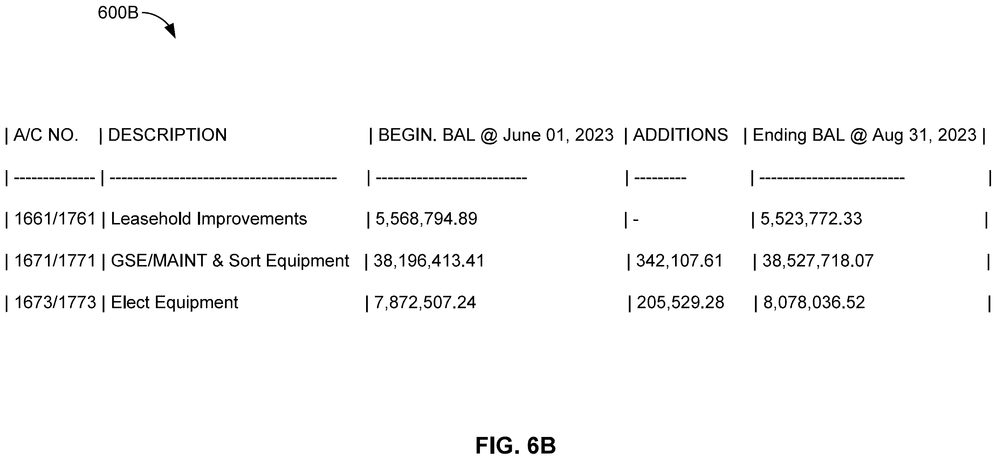

The file type identification module 302 may further extract text corresponding to the identified file format. In other words, once the file format is identified, the file type identification module 302 extracts the text or data relevant to the file format from the input data file, which may vary depending on the file format (e.g., textual data from a PDF, numerical data from an Excel spreadsheet, and/or image metadata from a Joint Photographic Experts Group (JPG)). The extracted text may be then pre-processed by the file type identification module 302 to convert the text into a common data format or a markdown format, which standardizes the text for further analysis and processing. In some examples, the file type identification module 302 may use the OCR engines 214 of the OCR system 204 through the OCR APIs 212 for converting the extracted text into the common data format. The common data format may involve transforming the text into a structured form, such as a table and/or JavaScript Object Notation (JSON), depending on the needs of the enterprise. An example common data format/markdown format 600B is illustrated in FIG. 6B.

Following the conversion of the text into the common data format, the file type identification module 302 may generate a Gen AI prompt that corresponds to both the common data format and the extracted text. The Gen AI prompt is further executed on two models: the rule-based model 320 and the Gen AI-based file type model 322 to identify the file type of the input data file. The rule-based model 320 applies the predefined rules (such as looking for keywords like "invoice number," "date," and "total" to classify it as an invoice) to classify the file type, while the Gen AI-based file type model 322 performs predictions and/or refinements based on patterns observed within the text, offering a more adaptable and dynamic identification process. An example Gen AI prompt is given below:

```
 "Sheet: <Sheet Name>
 Data: <Markdown Data>
 Sheet: <Sheet Name>
 Data: <Markdown Data>
 ##Instructions:
 Can you extract all Addition amount from Summary and compare Total amount in <Sheet Name>
 for each account number (partial match is fine) Output in JSON format:
 [{"Ending balance": STRING,
 "Account Number": STRING,
 "Account Number Addition": STRING,
 "Total Amount in EUR": SRING,
 "Match": STRING}]
 Can you extract Disposal amount from <Sheet Name> and compare Retire amount in <Sheet
 Name> for each account number (partial match is fine)
 Output in JSON format:
 [{
 "Ending Balance": STRING,
 "Account Number": STRING,
 "Account Number Disposal": STRING,
 "Total Amount in EUR": STRING,
 "Match": STRING}]"
 
```

Once the file type is identified, the file type identification module 302 may communicate information (e.g., the identified file type) to the entity extraction module 304, which enables the entity extraction module 304 to proceed with its function of extracting specific entities from the input data file.

In an implementation, the entity extraction module 304 may extract specific/most appropriate entities from the input data file based on the identified file type, and leveraging both the rule-based model 320 and the Gen AI-based entities model 324. In detail, to extract the specific/most appropriate entities from the input data file, the entity extraction module 304 may identify entities (e.g., entities relevant to the file type of the input data file) from an entity library based on the identified file type and a type of account (e.g., a financial account, a user account, a customer account, and/or the like) associated with the identified file type. For example, if the input data file corresponds to a financial document, the relevant entities may include account numbers, transaction dates, and/or amounts, whereas a legal document may involve relevant entities such as party names, clauses, or case references.

The entity extraction module 304 then proceeds to generate a Gen AI prompt based on the identified entities and an extracted text from the input data file (e.g., invoice #12345, due date: 2025-02-08, and/or the like). The Gen AI prompt may be intended to query the rule-based model 320 and the Gen AI-based entities model 324 for further refinement and identification of appropriate entities. An example Gen AI prompt for extracting the entities is given below:
Gen AI prompt: "Extract all entities applicable from the latest email and each attachment separately
Customer Name: This is a value assigned to a customer or payer. It refers to the name of the individual or organization associated with a specific account or profile. It is used to identify the person or entity responsible for making payments, receiving services, or engaging in transactions. It can also be referred to as Customer Name or Payer Name. Customer Number: This is a value assigned to a customer or payer. It is used to identify and track individual customers or payers within a system. It can also be referred to as Customer Account Number or Payer Account Number. Invoice Number: This is a value assigned to an invoice or payment document. It is used to track and reference specific invoices or payments. In some cases, it may also be referred to as Payment Number or Invoice Number or Document Number. Invoice Date: This is the date on which an invoice or payment document is issued. It represents the date when the invoice or payment is generated or sent to the customer or payer. In some cases, it may also be referred to as Invoice Date or Document Date. Invoice Amount: This is the amount of money specified on an invoice or payment document. It represents the amount that the customer or payer is required to pay. In some cases, it may also be referred to as Invoice Amount. Payment Date: This refers to the date on which a payment is made or is scheduled to be made. It indicates when the funds will be transferred from one party to another. In some cases, it may also be referred to as Payment Date
Claim Number: Claim Number
Claim Date: Claim Date
Claim Type: Claim Type
Deduction Reason Code: Deduction Reason Code
Reference: Reference
Department: Department
Voucher: Comments
Customer Promotion: Customer Promotion
Store Name: Store Name
Promotion Start Date: Promotion Start Date
Promotion End Date: Promotion End Date
Promotion Percentage: Promotion Percentage
Rebate Percentage: Rebate Percentage
Material Number: Part Number
Customer Material Number: Customer Material Number
Item Description: Desc
Quantity: Order
Quantity Received: Quantity Received
Quantity Returned: Quantity Returned
Quantity Short: Quantity Short
Quantity Shipped: Ship
List Price: Each
Unit Price: Unit Price
Net Cost: Net Cost
Currency Type: Currency Type
Advanced Shipment Number: Advanced Shipment Number
Bill of Loading Number: Bill of Loading Number
Carrier Name: Carrier Name
Tracking Details: Tracking Details
Tracking Number: Tracking Number
Unit Of Measurement: Unit of Measurement
Customer PO Number: Customer PO Number
Delivery Date: Delivery Date
Plant Number: Plant Number
Sales Order Number: Sales Order Number
Shipment Number: Shipment Number
Signature: Signature
Stamped: Stamped
Ship Date: Ship Date
Zip Code: Zip Code
Sub Total Tax: Sub Total Tax
Tax: Tax
Total Claim Amount: Total Claim Amount
Total Cost: Total"

The entity extraction module 304 may execute the Gen AI prompt on the rule-based model 320 and the Gen AI-based entities model 324 to extract the most appropriate entities corresponding to the file type. For example, the rule-based model 320 may apply the pre-determined rules to identify certain entities, while the Gen AI-based entities model 324 may use machine learning (ML) techniques to refine the extraction and handle more complex or ambiguous cases.

Additionally, the entity extraction module 304 is capable of determining a location (a physical or a logical location) of the extracted appropriate entities, referencing pre-stored file locations to provide context and enhance accuracy. The location determination allows to track where the specific/most appropriate entities exist within the input data file, supporting further processing or validation of extracted information. Examples of file types and entities extracted corresponding to the file types are given below in table (1):

**Table (1): File types and corresponding entities**

| Entities | File Type |
|---|---|
| Claim Number | Debit Memo |
| Claim Date | |
| Claim Type | |
| Deduction Reason Code | |
| Reference | |
| Department | |
| Voucher | Promotion Contract |
| Customer Promotion | |
| Store Name | |
| Promotion Start Date | |
| Promotion End Date | |
| Promotion Percentage | |
| Rebate Percentage | |
| Advanced Shipment Number | Proof Of Delivery \Bill of Loading |
| Bill of Loading Number | |
| Carrier Name | |
| Tracking Details | |
| Tracking Number | |
| Unit Of Measurement | |
| Customer PO Number | |
| Delivery Date | |
| Plant Number | |
| Sales Order Number | |
| Shipment Number | |
| Signature | |
| Stamped | |
| Ship Date | |
| Zip Code | |
| Sub Total Tax | |
| Tax | |

Further, the entity extraction module 304 may be communicatively coupled to the event identification module 306, enabling coordination and integration with broader event-driven processes.

The event identification module 306 may identify a transaction event corresponding to the extracted specific entities by mapping the extracted entities with an entity included in a pre-stored file. The event identification module 306 may use an AI-based matching model 326 to perform the mapping. The pre-stored file may be accessed from the database 316. The pre-stored file acts as a reference or database of known entities that are associated with past or predefined transaction events. The pre-stored file is different from the input data file. The pre-stored file includes data that has been previously processed, labelled, and/or classified. The data may include information like specific codes, customer identifiers, account numbers, and/or transaction types that facilitate the event identification module 306 to identify the transaction event, such as payments, purchases, refunds, and/or account adjustments. By comparing the extracted entities to the entity within the pre-stored file, the event identification module 306 may determine a type or category the transaction being described. For example, the type or category of the transaction involves specific action or event associated with the transaction, such as whether the transaction is a payment, a purchase, a refund, an account adjustment, and/or any other predefined type or category of the transaction.

For identifying the transaction event, the event identification module 306 may identify a match between a transaction line item from a ledger and a corresponding line item in the extracted specific entities based on the predefined matching rules stored in the rule database 202 (depicted in FIG. 2). The ledger may be stored in the database 316. The ledger is a financial record or system used to track and organize transactions within the enterprise. The ledger is a core component of accounting, providing a comprehensive and structured account of all financial activities, such as sales, purchases, payments, and/or receipts. The ledger records transactions by category, ensuring that financial data of the enterprise is systematically organized and easily accessible for reporting and analysis. Entries in the ledger are often organized into accounts, such as "Accounts Receivable," "Accounts Payable," "Revenue," and "Expenses." These accounts collectively provide a complete depiction of a financial health of the enterprise, and the ledger serves as a foundation for generating financial statements like balance sheets and income statements. Further, it may be apparent to a person skilled in the art that the transaction line item refers to an individual entry within a larger financial transaction, found in accounting records such as invoices, receipts, and/or ledgers. Each line item represents a distinct element of transaction and/or includes details like the amount, description, quantity (if applicable), and/or relevant account. In an invoice, for example, a transaction line item may correspond to a specific product and/or service, detailing cost, quantity purchased, and/or any applicable taxes or discounts. Further, the predefined matching rules may include a threshold-based rule. For example, if amount extracted from an invoice (e.g., the input data file) is slightly different from a ledger amount. In such a case, difference may be considered valid, as long as the difference falls within a predefined threshold.

In some examples, the event identification module 306 may employ the AI-based matching model 326 to perform a 1:1, 1:n, and/or n:n matching between line items in the ledger and/or a statement and the corresponding line item in the extracted specific entities to identify the match between the transaction line item from the ledger and the corresponding line item in the extracted specific entities. The identified match may include a file name and a page number, indicating where the transaction line item from the ledger may be validated against a corresponding value in the extracted specific entities.

The event identification module 306 may further generate a combination of rows from the extracted entities to identify a match for each transaction line item from the ledger. A number of rows in each combination may correspond to a predetermined maximum value. The predetermined maximum value refers to a specific, predefined threshold, and/or limit set in advance during the design and/or configuration of the backup validation system 102. For example, the predetermined maximum value corresponds to the maximum number of rows that may be included in a combination when generating potential matches between transaction line items from the ledger and rows from the extracted entities in the input data file. The predetermined maximum value may be defined based on factors such as performance, data structure, and/or desired efficiency of the backup validation system 102.

The event identification module 306 may compare each transaction line item with each probable combination of rows within the received input data file. Further, the event identification module 306 may identify the transaction event corresponding to the extracted entities based on the comparison and the identified match for each transaction line item. The event identification module 306 may filter matched rows within the received input data file from subsequent iterations based on the identified transaction event. In other words, once a match is found, the event identification module 306 identifies the corresponding transaction event by analyzing comparison results. The "transaction event" refers to a specific occurrence or transaction that the ledger entry pertains to, which may be validated by supporting documentation in the input data file. To ensure that the matching process is efficient, the event identification module 306 filters out rows that have already been successfully matched in earlier iterations, preventing redundant comparisons and streamlining process.

By way of an example, consider a scenario where the input data file has 10 rows, and the predetermined maximum value for the number of rows in each combination is set to 3. The event identification module 306 may generate combinations of 3 rows at a time from the input file to compare against transaction line items from the ledger. For example, the generated combinations are "combination 1: rows 1, 2, 3", "combination 2: rows 4, 5, 6", "combination 3: rows 7, 8, 9", "combination 4: rows 1, 4, 7", and so on. The event identification module 306 then compares each transaction line item from the ledger (e.g., a sale transaction of $100) to all possible combinations of rows generated from the input data file. For example, a ledger entry may state that $100 is received for a sale of goods. The event identification module 306 may compare the ledger line item to each combination of 3 rows from the input data file. The event identification module 306 checks if the rows, when combined, match with the $100 sale. Once the match is found between the ledger entry and the combination of rows, the event identification module 306 identifies the corresponding transaction event. For example, if the combination 2 (rows 4, 5, and 6) includes an invoice totaling $100 for the sale of the goods as mentioned in the ledger, the event identification module 306 may match the ledger entry to the transaction event (e.g., $100 for the sale of the goods), confirming that same sale recorded in the ledger.

Additionally, or alternatively, to identify the transaction event corresponding to the extracted entities, the event identification module 306 may determine an unmatched transaction line item from the extracted entities based on the comparison. The event identification module 306 may generate a transaction label for each of the determined unmatched transaction line based on the extracted entities using the AI-based matching model 326. The AI-based matching model 326 may correspond to a supervision label-based model. (e.g., a Descriptive Neural Network (DNN) model). In some examples, the event identification module 306 may generate the AI-based matching model 326. For generating the AI-based matching model 326, the event identification module 306 may generate a first transaction label corresponding to the identified file type. Further, the event identification module 306 may generate a second transaction label corresponding to pre-stored transactions of the enterprise. Based on the generated first transaction label, the generated second transaction label, and time series data of the extracted entities, the event identification module 306 may generate the AI-based matching model 326. The AI-based matching model 326 may be re-trained continuously based on user feedback. For example, the user feedback refers to annotations, corrections, and/or classifications provided by users to enhance accuracy of the AI-based matching model 326. The user feedback includes manual adjustments, feedback on the transaction event, and error reporting where the predictions of the AI-based matching model 326 are incorrect. The user feedback enables the event identification module 306 to continuously re-train the AI-based matching model 326 to improve performance of the AI-based matching model 326.

The event identification module 306 may predict appropriate matches between the determined unmatched transaction line and the received input data file by applying the generated transaction label onto the AI-based matching model 326. In other words, in situations where no direct match is found, the event identification module 306 may determine unmatched transaction line items from the ledger. The unmatched transaction line items are entries that may not be paired with any transaction line item from the ledger. To handle such cases, the event identification module 306 may use the AI-based matching model 326. For each unmatched transaction line item, the event identification module 306 generates a transaction label. Once the transaction labels are generated, the event identification module 306 applies the transaction labels to the AI-based matching model 326 to predict the most likely matches between the unmatched transaction line items and the combination of rows in the input data file.

The event identification module 306 may be communicatively coupled to the validation module 308. The validation module 308 may validate the identified transaction event based on one of the user feedback and/or the Gen AI-based validation model 328. The validation module 308 may generate a confidence score for each of the identified transaction event by applying the identified transaction event to the Gen AI-based validation model 328 along with the user feedback. The validation module 308 may map the generated confidence score for each of the identified transaction event with a pre-determined threshold value. The pre-determined threshold value is a configurable parameter. For example, the pre-determined threshold value may be configured with a high value such as 95% during a deployment process of the system 102. The pre-determined threshold value may be dynamically adjusted and fine-tuned over time as additional documents or files are processed. The adjustment of the pre-determined threshold value may depend on a language and the type of documents or files used for a specific use case. The high pre-determined threshold value may trigger additional human reviews for samples with lower confidence scores, thereby ensuring enhanced accuracy of the overall mapping. The validation module 308 may validate the identified transaction event based on the mapping. The results of validation may include a positive result indicating that the generated confidence score maps with the pre-determined threshold value and a negative result indicating that the generated confidence score fails to map with the pre-determined threshold value. The validation module 308 may be communicatively coupled to the change determination module 310.

By way of an example, consider a scenario where the validation module 308 may generate a confidence score of 80% for the match using the Gen AI-based validation model 328, and the predefined threshold is set at 85%. In this case, the result of validation includes the negative result indicating that the generated confidence score "80%" fails to map with the pre-determined threshold value 85%. Since the generated confidence score "80%" is below the predefined threshold, the match may be flagged as uncertain. In this case, a user is prompted to review the match through a side-by-side view of the general ledger and the receipt. The user may manually browse through the input data file, select a correct page if needed, and confirm the match or correct the match. If the user confirms the match, the Gen AI-based validation model 328 may learn from the user feedback (e.g., confirmed match), improving future match predictions.

By way of another example, consider a scenario where the validation module 308 generates a confidence score of 92% for the match using the Gen AI-based validation model 328. Since the confidence score 92% exceeds the predefined threshold of 85%, the match is validated automatically without any need for human intervention. The validation module 308 then confirms that the transaction event in the ledger corresponds to a record in the input data file, completing the validation process successfully.

The change determination module 310 may determine a change in one of: the identified transaction event, the extracted entities, and/or the identified file type based on results of validation. The change determination module 310 may obtain the user feedback corresponding to the identified transaction event, the extracted entities, and the identified file type. The user feedback includes one of user recommendations, user preferences, and/or user modifications. The change determination module 310 may compare the identified transaction event, the extracted entities, and/or the identified file type with the obtained user feedback using the Gen AI-based validation model 328. The change determination module 310 may determine the change in the identified transaction event, the extracted plurality of entities, and/or the identified file type based on the comparison. The processor 110 may continuously learn the determined change in the one of: the identified transaction event, the extracted entities, and the identified file type based on the user feedback. Further, the processor 110 may dynamically update the AI-based matching model 326 based on the learnt change. The AI-based matching model 326 is updated by incorporating the user feedback (e.g., recommendations, preferences, and modifications) to determine changes in the transaction event, the entities, and the file type. The changes are learned by the processor and used to re-train and update the AI-based matching model 326, improving accuracy of the AI-based matching model 326 over time. The change determination module 310 may be communicatively coupled to the modification module 312.

The modification module 312 may modify one of: the identified transaction event, the extracted entities, and/or the identified file type based on the determined change. The modification module 312 may be communicatively coupled to the rendering module 314. The rendering module 314 may output the modified transaction event corresponding to the received input data file on a user interface of the user device 106.

By way of an example, consider a scenario, where a user uploads a bank statement, and the backup validation system 102 automatically processes a transaction from "TechMart", categorizing the transaction as a "retail purchase" and extracting relevant details such as amount and payment method. However, the user realizes that the transaction is for office supplies and needs to be categorized as a "business expense". The user modifies categorization and provides feedback, suggesting that future transactions from "TechMart" needs to be classified as "business expenses". The change determination module 310 compares the feedback (which indicates the category as business expense) with original data (indicating the category as retail purchase), identifies discrepancy. Further, the modification module 312 updates the categorization. The AI-based matching model 326 may be updated based on the feedback, ensuring that similar transactions from "TechMart" are correctly classified as "business expenses" in the future, improving accuracy of the backup validation system 102 over time.

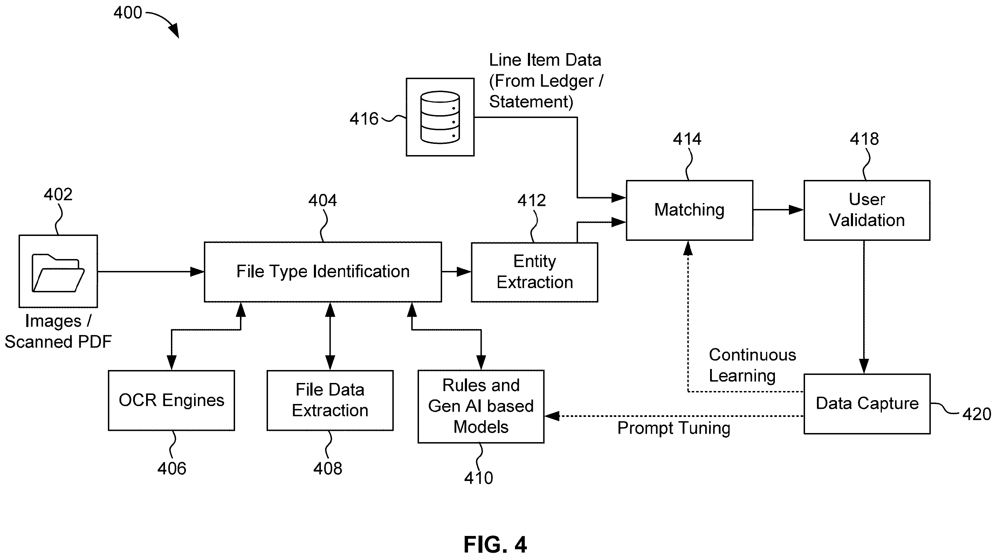

FIG. 4 depicts an example process flow 400 of backup validation for enterprises, in accordance with implementations of the present disclosure. FIG. 4 is explained in conjunction with FIGS. 1-3.

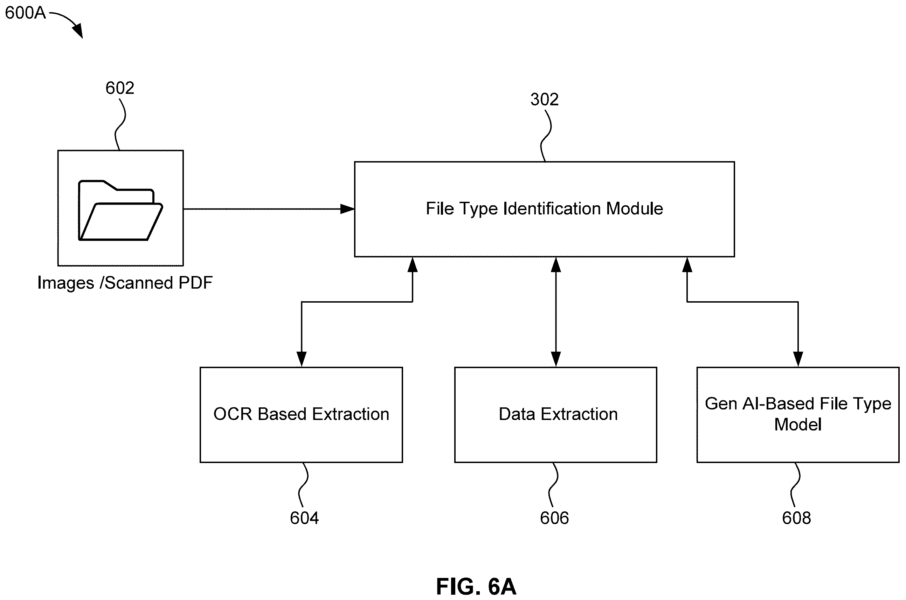

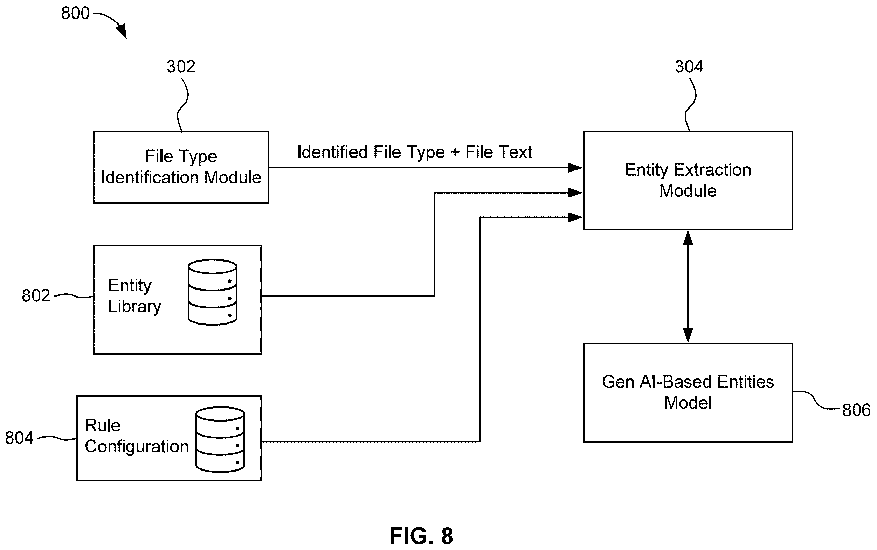

Input Data files (e.g., images or scanned PDFs 402) may be received using the file type identification module 302. Further, a file type identification 404 is carried out by the file type identification module 302, which employs various techniques for extracting and analyzing data from the input data files. The techniques include use of OCR engines 406, (similar to the OCR engines 214 described in FIG. 2), libraries designed for file data extraction 408, and rules and Gen AI based models 410 (analogous to the rule and Gen AI-based models 218 described in FIG. 2 and FIG. 3). The file type identification 404 is further explained in detail in conjunction with FIG. 6A. Further, entity extraction 412 may be performed using the rules and Gen AI based models 410 for extracting key entities or appropriate entities form the input data files (e.g., supporting files) based on the identified file type, which allows the backup validation system 102 to accurately extract essential information (e.g., the appropriate entities). The entity extraction module 304 using the rules and Gen AI based models 410, further identifies and locates key entities within the input data files or the supporting files, ensuring that relevant data is extracted for matching with ledger entries of a ledger. The entity extraction is further explained in detail in conjunction with FIG. 8. Thereafter, the matching 414 may be performed using the extracted entities and line item data 416 from the ledger/statement to perform a 1:1 or n:n match between line items from the ledger and the input data files or the supporting files. In cases where a confidence is low, a user validation 418 is employed to enable manual review and corrections. The backup validation is already explained in detail in conjunction with various modules 302-314 of the backup validation engine 114, therefore repeated description is omitted for brevity. Further, a data capture 420 may be performed by the telemetry collector 220 of the logging system 210 (depicted in FIG. 2) to capture data on user actions (e.g., reviewing and validating transaction matches, suggested corrections, approved transaction matches, and/or the like) and performance of the backup validation system 102 (e.g., a matching output, entity extraction output, processing time, error rates, event triggers, resource usage, transaction volume, and/or the like), allowing for the continuous tuning of Gen AI prompts and continuous learning of the AI-based matching model 326.

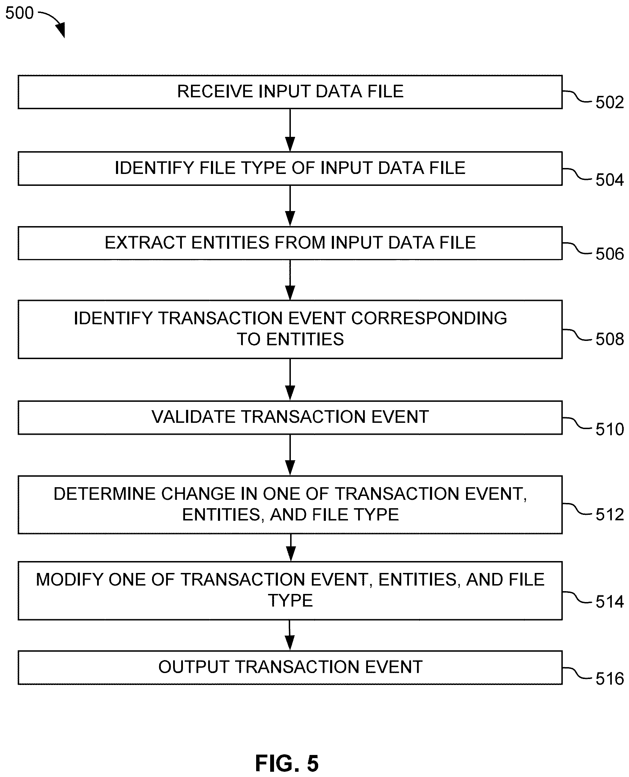

FIG. 5 is a flow diagram that presents an example computer implemented method 500 for backup validation of enterprises, in accordance with implementations of the present disclosure. In some implementations, the computer implemented method 500 may be executed by the backup validation system 102, as described in relation to FIGS. 2-3.

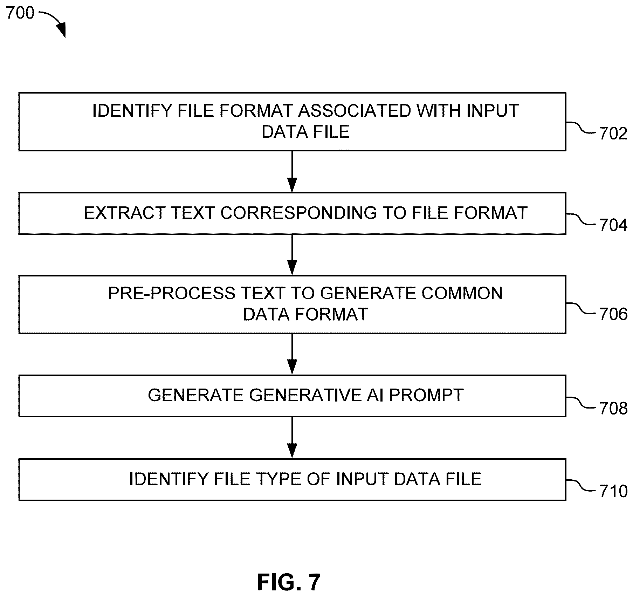

At step 502, the computer implemented method 500 may include receiving, by the processor 110, an input data file corresponding to transactions of an enterprise from various data sources (e.g., the data sources 104 as depicted in FIG. 1), which is already explained in detail in conjunction with FIG. 3. Further, at step 504, the computer implemented method 500 may include identifying, by the processor 110, a file type of the input data file using one of: the rule-based model 320 and the Gen AI-based file type model 322. The identification of the file type is further explained in detail in conjunction with FIG.7.

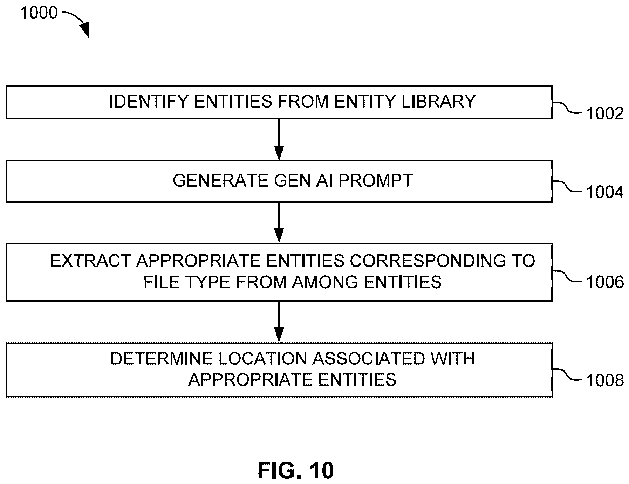

At step 506, the computer implemented method 500 may further include extracting, by the processor 110, entities from the input data file, based on the file type and using one of: the rule-based model 320 and the Gen AI-based entities model 324. The extraction of the entities is further explained in detail in conjunction with FIG.10.

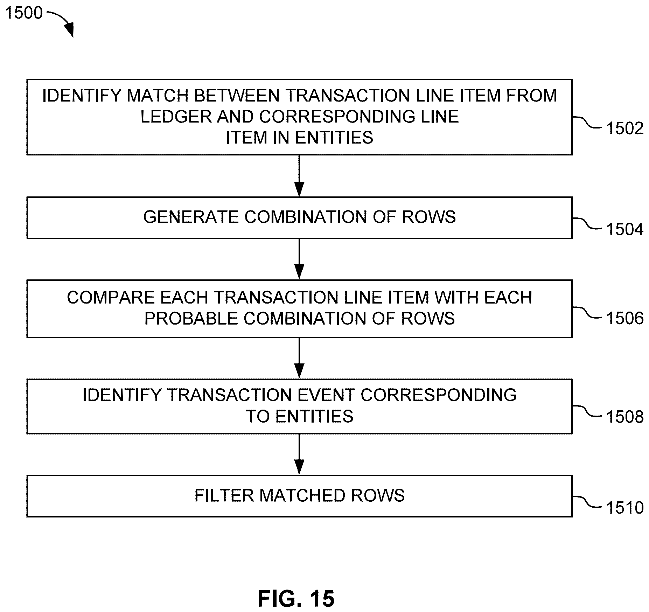

At step 508, the computer implemented method 500 may further include identifying, by the processor 110, a transaction event corresponding to the entities by mapping the entities with an entity included in a pre-stored file using the AI-based matching model 326. The identification of the transaction event is further explained in detail in conjunction with FIG.15.

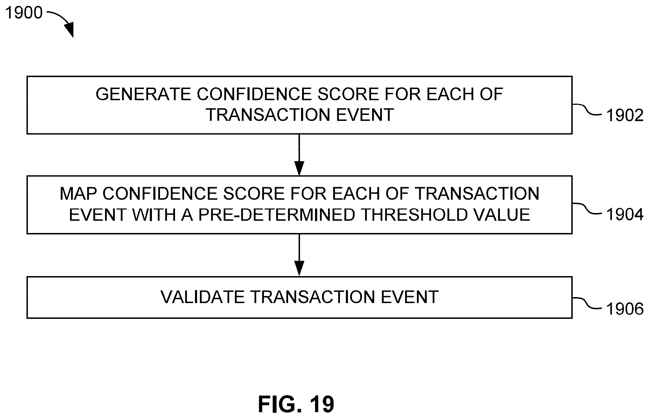

At step 510, the computer implemented method 500 may further include validating, by the processor 110, the transaction event based on user feedback and the Gen AI-based validation model 328. The validation of the transaction event is further explained in detail in conjunction with FIG.19.

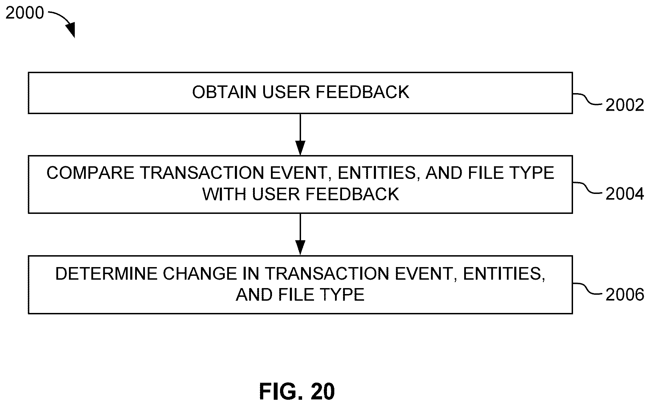

At step 512, the computer implemented method 500 may further include determining, by the processor 110, a change in at least one of: the transaction event, the entities, and the file type based on results of the validation. The determination of the change is further explained in detail in conjunction with FIG.20.

At step 514, the computer implemented method 500 may further include modifying, by the processor 110, at least one of: the transaction event, the entities, and the file type based on the change. The modification is already explained in detail in conjunction with the modification module 312 in FIG. 3, therefore repeated description is omitted herein for sake of brevity.

At step 516, the computer implemented method 500 may further include outputting, by the processor 110, the transaction event (e.g., the modified transaction event) corresponding to the input data file on a user interface of a user device (e.g., the user device 106). The outputting of the transaction event is already explained in detail in conjunction with the rendering module 314 in FIG. 3, therefore repeated description is omitted herein for sake of brevity.

FIG. 6A is an example illustration 600A of identifying a file type of an input data file, in accordance with implementations of the present disclosure. FIG. 6A is explained in conjunction with FIGS. 1-5.

The file type identification module 302 may receive an input data file (e.g., an image or a scanned PDF 602). The file type identification module 302 identifies a file format of the input data file based on an extension of the image or the input data file. The file type identification module 302 may categorize the input data file into distinct groups. For example, for formats with easily recognizable extensions, such as image files, the file type identification module 302 may directly identifies the input data file as image-based file and routes the input data file for OCR based extraction 604 (performed using the OCR engines 214) to convert the image into text. Further, the file type identification module 302 may perform data extraction 606 (using the data extraction model 330) on the text using data extraction techniques (e.g., rule-based extraction, template-based extraction, and/or the like) to structure and interpret the text.

Further, for structured data formats like Excel and/or Comma-Separated Values (CSV), the file type identification module 302 may perform the data extraction 606 leveraging specialized libraries to extract data directly from the input data file. The identification of the file format allows the file type identification module 302 to select appropriate extraction approach based on file format.

However, for hybrid formats like Document Open XML (DOCX), PDF, or HyperText Markup Language (HTML), which may include a combination of digital text and images, a more detailed method may be used for the data extraction 606. Such type of hybrid formats may be either scanned documents, fully digital files, and/or a combination of both, including embedded images along with textual content. In such a case, an additional step may be needed. First, textual data is extracted using format-specific parsers, followed by the OCR based extraction 604 to capture any embedded images that may include valuable information. Once the text is extracted, the text may be converted into a markdown format or a common data format, preserving original formatting of the file. The example common data format 600B is depicted in FIG. 6B. Preserving the original formatting of the file while converting the text into the common data format may capture a position of certain values in the input data file that identify significance of the values (e.g., identifying whether a value represents a credit or debit amount).

After the text is extracted and converted into the common data format or the markdown format, a Gen AI-based file type model 608 (analogous to the Gen AI-based file type model 322) may be used to identify the file type of the input data file, such as whether the input data file is an invoice, bill of lading, proof of delivery, contract, and/or another type of document. The file type identified by the Gen AI-based file type model 608 is a key to determining which entities need to be extracted, as different document types have distinct data requirements. The classification or the file type identification aids in shaping data extraction process, enabling the backup validation system 102 to extract only relevant entities specific to the identified file type.

FIG. 7 is a flow diagram that presents an example computer implemented method 700 for identifying a file type of an input data file, in accordance with implementations of the present disclosure. In some implementations, the computer implemented method 700 may be executed by the file type identification module 302, as described in relation to FIG. 3. FIG. 7 is explained in conjunction with FIGS. 1-6A-6B.

At step 702, the computer implemented method 700 may include identifying, by the processor 110, a file format associated with the input data file based on a file extension and using the data extraction model 330. At step 704, the computer implemented method 700 may further include extracting by the processor 110, a text corresponding to the file format. At step 706, the computer implemented method 700 may further include pre-processing by the processor 110, the extracted text to generate a common data format (e.g., a markdown format). The example common data format 600B is illustrated in FIG. 6B. At step 708, the computer implemented method 700 may further include generating by the processor 110, a Gen AI prompt corresponding to the common data format and the text. At step 710, the computer implemented method 700 may include identifying, by the processor 110, the file type of the input data file by executing the generated Gen AI prompt on the rule-based model 320 and the Gen AI-based file type model 322. Steps 702-710 are explained in detail in conjunction with the file type identification module 302 in FIG. 3 and FIG. 6A, therefore repeated description is omitted for sake of brevity.

FIG. 8 depicts an example illustration 800 of extracting entities using the entity extraction module 304, in accordance with implementations of the present disclosure. FIG. 8 is explained in conjunction with FIGS. 1-7.

As illustrated in FIG. 8, the entity extraction module 304 receives the file type identified for the input data file from the file type identification module 302. Upon receiving the identified file type and the extracted text from the received input data file, the entity extraction module 304 uses an entity library 802 and rule configurations 804 intended for the rule-based model 320 to determine relevant entities to be extracted. The relevant entities depend on the file type (e.g., invoice, bill of lading, proof of delivery, contracts/agreements, and/or working files) and a specific account type (e.g., accruals). For example, if the input data file is a contract or agreement and the account pertains to accruals, the entity extraction module 304 may identify entities such as total outstanding amount, payment frequency, and/or installment amount. Additionally, the entity extraction module 304 employs the rule-based model 320 (including the rule configurations 804) that relies on previously established rules and allows an end user to propose new entities and/or rules based on variations observed in new account types, facilitating the extraction to specific requirements of the user.

Once the relevant entities are identified, the entity extraction module 304 generates a Gen AI prompt using the extracted text and the identified entities. The Gen AI prompt may be processed using a Gen AI-based entities model 806 (e.g., analogous to the Gen AI-based entities model 324 as depicted in FIG. 3) for further processing, enabling the Gen AI-based entities model 806 to extract the entities and locations associated with the entities within the input data file, which may span across multiple pages. An output from the Gen AI-based entities model 806 includes the identified entities along with locations (page numbers) of the entities. The output is then used for further processing or user review. The entities may be extracted by ensuring that only the relevant data is extracted from the input data file based on the file type, the entities identified, and/or the specific rules in place, facilitating efficient and accurate data extraction.

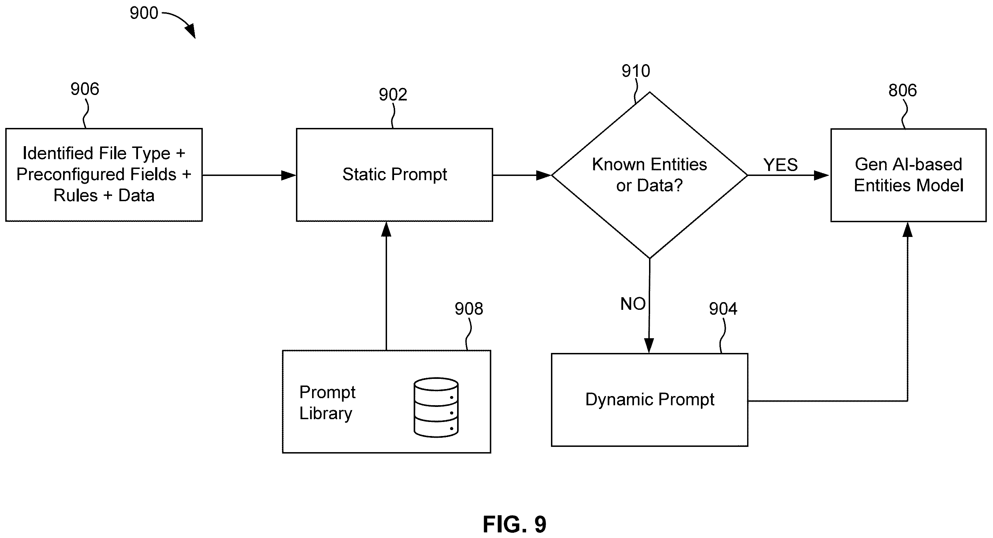

FIG. 9 depicts an example illustration 900 of generating a Gen AI prompt dynamically, in accordance with implementations of the present disclosure. The Gen AI prompt may be one of a static prompt 902 or a dynamic prompt 904. FIG. 9 is explained in conjunction with FIG. 8.

The generation of Gen AI prompt dynamically (e.g., hereafter also referred to as a dynamic prompt 904) enhances accuracy and efficiency of extracting relevant data or the relevant entities from various file types. The dynamic prompt 904 may be generated based on the file type, preconfigured fields, and/or associated rules, and then the dynamic prompt 904 may be executed against the data of the input data file to extract the relevant entities.

Initially, the static prompt 902 may be generated based on configuration parameters 906 including the identified file type, preconfigured field, rules (entity extraction rules) used by the rule-based model 320, and other data (e.g., the extracted text, the input data file, or the like). The static prompt 902 serves as a template, leveraging the identified file type, the preconfigured fields, and the rules. A prompt library 908 including various pre-existing static prompts tailored to specific file types may be used for generating the static prompt 902. Further, a condition 910 including if the entities or data is known may be checked. For example, for input data files where the entities are known and predefined, the static prompt 902 may be directly used for accessing the Gen AI-based entities model 806. However, if the entities are not known or for new or unknown file types, the dynamic prompt 904 may be generated by adjusting a prompt generation process based on the data in the input data file, ensuring that the Gen AI prompt is dynamically aligned with context of the input data file. Once the dynamic prompt 904 is generated, the dynamic prompt 904 may be executed against the Gen AI-based entities model 806. The dynamic prompt 904 may be processed using the Gen AI-based entities model 806 using data of the input data file as an input, and in response, the extracted entities along with locations and contextual details may be generated.

Dynamic prompt generation (e.g., generation of the dynamic prompt 904) ensures that the Gen AI prompt remains specific to the file type and data of the input data file, leading to more accurate and relevant extraction of the entities. By the dynamic prompt generation, the backup validation system 102 avoids a challenge of trying to create a universal prompt that includes all possible extraction rules for every combination of file type and entity, which may lead to inaccurate results. The dynamic prompt generation improves entity extraction accuracy by focusing only on relevant rules for the given file type and context of the input data file, rather than trying to cover every possible case in a single, and generic prompt. The dynamic prompt generation streamlines the entity extraction process, making the entity extraction precise and effective. Processing of the dynamic prompt 904 using the Gen AI-based entities model 806 may result in a final output. The final output may be a set of extracted entities which may be used further, ensuring that the entities are extracted in the most accurate manner possible for any given input data file.

FIG. 10 illustrates a flow diagram that presents an example computer implemented method 1000 for extracting entities from the input data file, in accordance with implementations of the present disclosure. In some implementations, the computer implemented method 1000 may be executed by the entity extraction module 304, as described in relation to FIG. 3.

At step 1002, the computer implemented method 1000 may include identifying, by the processor 110, the entities from the entity library 802 based on the file type and a type of account associated with the file type. At step 1004, the computer implemented method 1000 may include generating, by the processor 110, a Gen AI prompt corresponding to the entities and an extracted text. At step 1006, the computer implemented method 1000 may include extracting, by the processor 110, appropriate entities corresponding to the file type from among the identified entities by executing the generated Gen AI prompt on the rule-based model 320 and the Gen AI-based entities model 324. At step 1008, the computer implemented method 1000 may include determining, by the processor 110, a location associated with the extracted appropriate entities based on a pre-stored file location. Steps 1002-1008 are explained in detail in conjunction with the entity extraction module 304 in FIG. 3, and in FIGS. 8-9, therefore repeated description is omitted for sake of brevity.

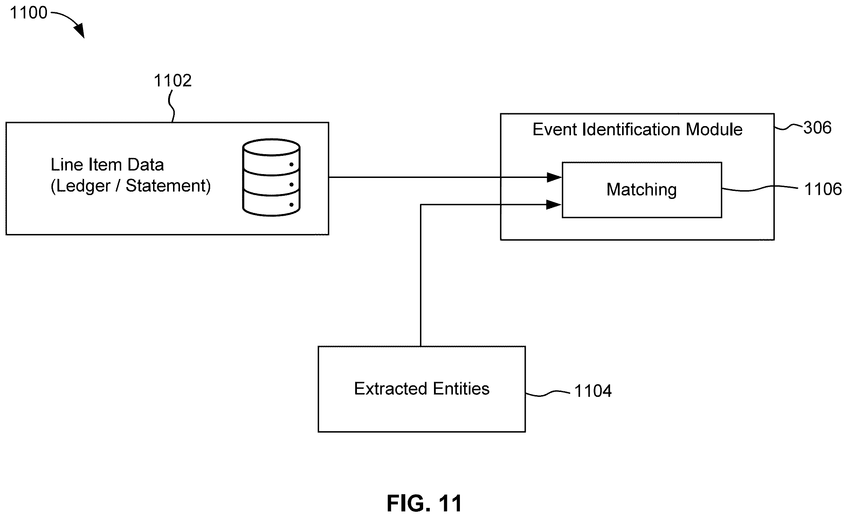

FIG. 11 depicts an example illustration 1100 of performing matching between line items of a ledger and input data files (e.g., supporting documents), in accordance with implementations of the present disclosure. The matching may be performed using the event identification module 306. FIG. 11 is explained in conjunction with FIGS. 1-10.

Initially, line-item data 1102 (from the line items of the ledger/statement) may be compared/matched against line items of the extracted entities 1104 (from the input data files or the supporting documents (e.g., File 1, File 2, etc.)). The event identification module 306 may perform matching 1106 for matching/comparing the line-item data 1102 with the extracted entities 1104. The matching 1106 may include applying a 1:1 rule-based match, where the event identification module 306 identifies exacts or tolerance-based matches based on predefined rules such as amount, date, and other relevant attributes. Successfully matched line items are excluded from further processing. In a subsequent step, remaining unmatched line items from the ledger may be subjected to a 1: n rule-based matching. Each line item (of the remaining unmatched line items) is compared with combinations of rows from the input data files or the supporting documents, up to a maximum of for example 10 combinations per line item. The event identification module 306 iterates through different sets of rows from the input data files or the supporting documents to identify valid combinations that substantiate a single line item from the ledger. Matched combinations are then excluded from future iterations, further streamlining the process of matching. For the line items from the ledger that are not matched, the event identification module 306 may employ a DNN model (e.g., the AI-based matching model 326 as described in FIG. 3) to identify potential matches. Further, the identified potential matches are presented to a user on the user device 106 for a final validation. The user may review, confirm, and/or reject each match, ensuring that the matches are verified and accurate.

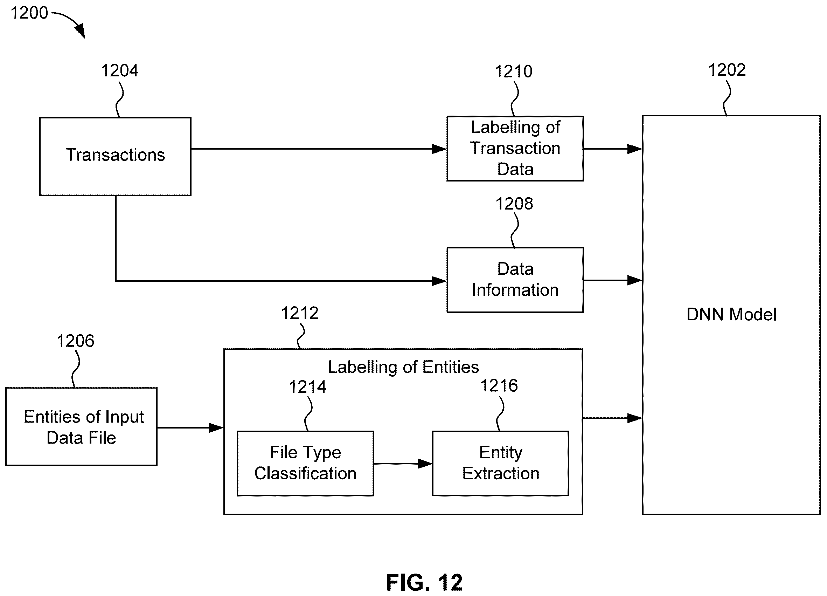

FIG. 12 illustrates an example illustration 1200 of training of a DNN model 1202 (e.g., the AI-based matching model 326), in accordance with implementations of the present invention. Training of the DNN model 1202 may be performed using the event identification module 306. FIG. 12 is explained in conjunction with FIG. 11. The DNN model 1202 is trained on historical transaction data, allowing the DNN model 1202 to learn complex patterns and relationships between the line items of the ledger and the input data file. The training enables the DNN model 1202 to make predictions about possible matches for those transactions that may not be matched by rule-based methods.

The training for the DNN model 1202 involves using a combination of transactions 1204 (e.g., historical transactions) from the ledger and entities of the input data file 1206 to train the DNN model 1202 to identify potential matches. For training of the DNN model 1202, transaction data may be prepared based on the transactions 1204, which include key details such as the transaction date (data information 1208, amount, and other relevant attributes like transaction type). The transaction data represents line items from the ledger that need to be matched to the input data file. Alongside the transaction data, the entities of the input data file 1206 are also extracted, such as invoices, receipts, and/or purchase orders. The extracted entities include information like file type (e.g., invoice, receipt) and transactional details (e.g., amount, vendor names, invoice numbers), which are essential for establishing matches between line items of the ledger and the input data file.

Once the transaction data from the transactions 1204 and the entities of the input data file 1206 are gathered, the transaction data and the entities of the input data file 1206 may be subjected to labelling 1210. During the training, labelling 1210 of the transaction data (e.g., the first transaction label) and labelled historical transactions (e.g., the second transaction label) may be used to train the DNN model 1202 for relationships between the entities and the input data file. For labelling 1210 the transaction data for training, a hybrid method combining rule and Gen AI based models (e.g., the rule and Gen AI-based models 218) is used. The labelling 1210 of the transaction data is performed based on the transactions 1204, where a label generated for each transaction captures key attributes such as a transaction type, a vendor, and a transaction method (e.g., credit/debit). Labels generated from the labelling 1210 may facilitate the DNN model 1202 to map the labels to corresponding file types of the input data file. For example, labels for transaction texts may be given below:
ABC*XYZK HTTP://WWW.XY AB → XYZK PURCHASE ONLINE
ABC*XYZK.ABC - GROCER HTTP://WWW.XY AB → XYZK GROCERY PURCHASE ONLINE
415146143189_Payment_Received_UPI → PAYMENT RECEIVED UPI CHANNEL
If sufficient labelled transaction data is not available, the hybrid method using the GenAI and the rule-based methods may generate additional training data, ensuring that more real-world data becomes available for training and testing the DNN model 1202.

Along with the labelling 1210 of the training data, labelling 1212 of the entities may be performed. The labelling 1212 of the entities may involve file type classification 1214 and entity extraction 1216. The file type classification 1214 involves classifying the file type of the input data file (e.g., determining whether the input data file is an invoice, Proof of Delivery (POD), receipt, etc.). The file type classification 1214 involves identifying what kind of document the input data file represents. In the entity extraction 1216, specific entities (such as vendor names, invoice numbers, product types, transaction details, and/or the like) are extracted from the input data file based on the file type. The labelling 1212 of the entities is also carried out using Gen AI, in a two-step process. A first step involves generating a label for the file type (e.g., invoice, Proof of Delivery (POD)), while a second step involves generating more specific labels based on data extracted from the input data file, such as a vendor name and a product type for an invoice. The labelling 1212 of the entities ensures that correct relationships between line items from the ledger and the input data file are established, which ensures that the DNN model 1202 learns proper associations of the line items of the ledger and the input data file.

The labels or labelled dataset generated using the labelling 1210 of the transaction data and the labelling 1212 of the entities may be used for training the DNN model 1202, allowing the DNN model 1202 to recognize patterns in data from the ledger and the input data file that signify valid matches. For example, the DNN model 1202 learns how attributes such as amounts, dates, and other details in the ledger correspond to similar data in the input data file. Over time, the DNN model 1202 refines internal parameters, improving ability of the DNN model 1202 to make accurate predictions.

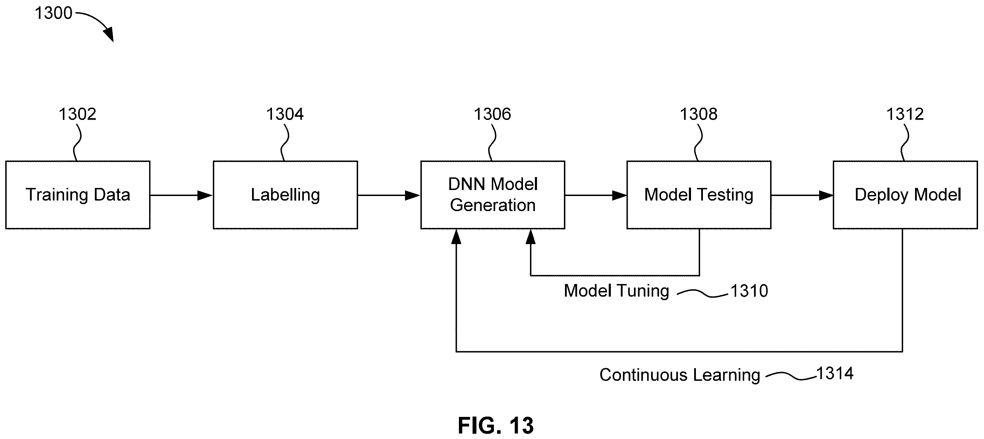

FIG. 13 illustrates an example process 1300 of training, testing, and deploying the DNN model 1202, in accordance with implementations of the present disclosure. FIG. 13 is explained in conjunction with FIGS. 11-12.

Initially, training data 1302 may be prepared which includes generating labels and labelled data (e.g., transaction description along with corresponding labels) using a hybrid method that combines Gen AI (for generating synthetic data and labels) and rule-based methods. For example, a label may be "payment received", and the labelled data may include a description "415146143189_payment_received_ABC" along with the label "payment received". The synthetic data refers to artificially generated data that is created to augment real, and historical transaction data for training the DNN model 1202. The synthetic data simulate real-world data patterns and transactions that the DNN model 1202 may learn from, even if actual data is sparse or not readily available.

Once the labels are generated, the labelled data is split into three distinct sets including a training g set, a validation set, and a testing set. The training set is primarily including GenAI-generated data, which aids in supplementing real-time data for training of the DNN model 1202. The validation set is used throughout a training process to monitor performance of the DNN model 1202 and prevent overfitting. The validation set ensures that the DNN model 1202 generalizes well to unseen data. The testing set, including primarily of real data, may be used exclusively to test the final performance of the DNN model 1202 after training.

With the data split and prepared, labelling 1304 may be performed on both the transaction data and the entities of the input data file 1206. The labelling 1304 involves generating weak supervision labels for the transaction data. The weak supervision labels may depict key attributes such as the transaction type, vendor, and whether a transaction is a credit or debit transaction. Additionally, the GenAI methods are used to extract labels from the input data file. The labelling 1304 involves two key steps including file type classification to categorize the supporting document (e.g., invoice, receipt), and entity extraction to identify key data within the input data file, such as a vendor name, a product type, and other relevant details, as illustrated in FIG. 12. The labelled datasets (generated for both the transactions 1204 and the input data file) are important for the DNN model 1202 to analyze and learn relationships between the two, facilitating accurate match predictions.

Following the labelling 1304, DNN model generation 1306 may be performed to generate the DNN model 1202. The DNN model 1202 may be generated using two identical sub-networks, each processing a type of input (e.g., the transaction data or data of the input data file). Each subnetwork processes respective data through layers including dense layers for numerical values (like transaction amounts) and embedding layers for categorical data (such as vendor names and file types). Outputs from both sub-networks are then compared using a cosine similarity function, which evaluates a similarity between the transaction data and data of the input data file. Following the evaluation of the similarity, the DNN model 1202 uses a single neuron with a sigmoid activation function that produces a match probability, predicting likelihood that a transaction matches the input data file. The labelled data generated in the previous step is used to train the DNN model 1202, allowing the DNN model 1202 to learn how input features (such as amounts, vendor names, and dates) correspond to correct matches between the transactions 1204 and the input data file.

After the DNN model 1202 is trained, model testing 1308 may be performed. Here, the DNN model 1202 may be tested on the testing set, which includes real data or new data that is not included in the training set during training. The model testing 1308 may be performed to assess performance of the DNN model 1202 on the real data or new data that is not included in the training set. Key performance metrics such as accuracy, precision, recall, and F1-score are used to evaluate how well the DNN model 1202 may generalize learned patterns to the real or the new data. Insights from the model testing 1308 are used to determine if the DNN model 1202 is ready for deployment or if further adjustments are needed.

Once the DNN model 1202 is tested, model tuning 1310 may be performed which includes fine-tuning parameters (such as a number of layers, neurons per layer, and/or learning rate) of the DNN model 1202 to achieve the best possible performance based on the testing results. A final step includes deploying the model 1312. After successful testing and tuning, the DNN model 1202 may be deployed for generating the first transaction label. The DNN model 1202 after deployment may be is capable of generating match predictions for incoming transactions, each with a confidence score. If the match probability is greater than a predefined threshold (e.g., 98%), the match is considered as a confirmed match, while probabilities between 80% and 98% indicate a potential match, flagged for user review. The deployment allows the DNN model 1202 to assist in automatically matching transactions of the ledger to the input data file, streamlining enterprise processes, improving efficiency, and reducing manual errors in matching. Additionally, continuous learning 1314 is implemented, where the DNN model 1202 is periodically retrained with the new data, allowing the DNN model 1202 to adapt to changing patterns and ensure sustained high performance over time. The continuous learning 1314 refines the DNN model 1202 further and ensures that the DNN model 1202 remains accurate in the long run, even as new data is encountered.

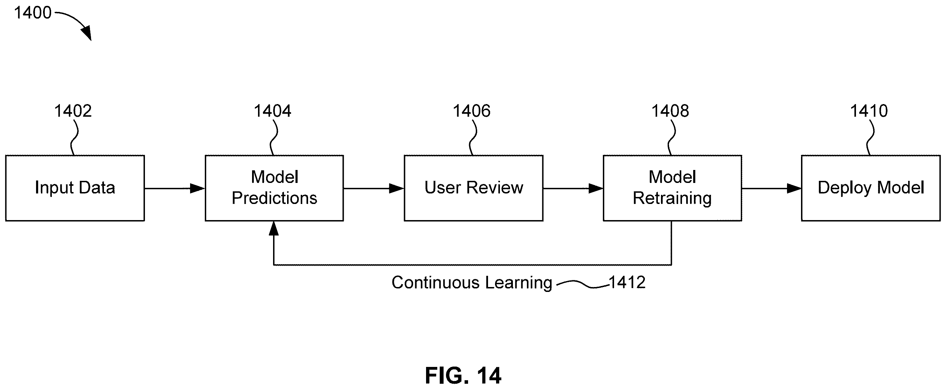

FIG. 14 is an example illustration 1400 of continuous learning of the DNN model 1202 in real-time, in accordance with implementations of the present disclosure. FIG. 14 is explained in conjunction with FIGS. 11-13. The DNN model 1202 may be the trained DNN model.

The DNN model 1202 may receive input data 1402. The input data 1402 includes information associated with the transactions and input data files, which are passed through the DNN model 1202 to generate model predictions 1404 regarding potential matches between the transactions and the input data files. For example, the DNN model 1202 assigns a confidence score to each prediction, facilitating a user interpret how confident the DNN model 1202 is about a match.

Each prediction generated by the DNN model 1202 may be presented to the user on the user device 106 for user review 1406. The user has an option to either confirm the model predictions 1404 or change the match based on knowledge or expertise of the user. The user review 1406 ensures that the model predictions 1404 are validated and allows for human oversight in cases where the DNN model 1202 may make incorrect assumptions.

If the user changes the match, the change may be recorded as feedback and sent for initiating model re-training 1408. New data, along with the feedback (which acts as a new ground truth), is fed into the DNN model 1202 for labelling. The original training data is then combined with the new data, labelled data, and the DNN model 1202 undergoes the model re-training 1408 to adjust internal parameters and improve predictions of the DNN model 1202.

Once the DNN model 1202 is re-trained with the new ground truth (e.g., updated data and adjusted feature weights), the DNN model 1202 may be deployed or redeployed 1410 forgenerating the first transaction label. Further, the continuous learning 1412 may be performed that ensures that the DNN model 1202 remains highly accurate and capable of handling new, unseen data as the DNN model 1202 continuously learns from real user interactions.

FIG. 15 illustrates an exemplary flow diagram that presents a computer implemented method 1500 for identifying a transaction event corresponding to the extracted entities, in accordance with implementations of the present disclosure. In some implementations, the computer implemented method 1500 may be executed by the event identification module 306, as described in relation to FIG. 3.

At step 1502, the computer implemented method 1500 may include identifying, by the processor 110, a match between a transaction line item from a ledger and a corresponding line item in the extracted entities based on predefined matching rules. The predefined matching rules may include a threshold-based rule. At step 1504, the computer implemented method 1500 may include generating, by the processor 110, a combination of rows from the extracted entities to identify a match for each transaction line item from the ledger. A number of rows in each combination corresponds to a predetermined maximum value. At step 1506, the computer implemented method 1500 may further include comparing, by the processor 110, each transaction line item with each probable combination of rows within the input data file. At step 1508, the computer implemented method 1500 may include, identifying, by the processor 110, the transaction event corresponding to the extracted entities based on the comparison and the identified match between the one transaction line item. At step 1510, the computer implemented method 1500 may include filtering, by the processor 110, matched rows within the received input data file from subsequent iterations based on the identified transaction event. Steps 1502-1510 are explained in detail in conjunction with the event identification module 306 in FIG. 3, therefore repeated description is omitted for sake of brevity.

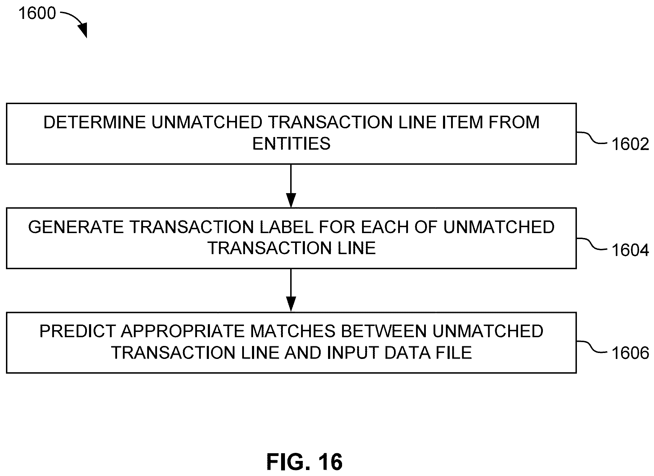

FIG. 16 illustrates another exemplary flow diagram that presents a computer implemented method 1600 for identifying the transaction event corresponding to the extracted entities, in accordance with implementations of the present disclosure. In some implementations, the computer implemented method 1600 may be executed by the event identification module 306, as described in relation to FIG. 3.

At step 1602, the computer implemented method 1600 may include determining, by the processor 110, an unmatched transaction line item from the extracted entities based on the comparison. At step 1604, the computer implemented method 1600 may include generating, by the processor 110, a transaction label for each of the determined unmatched transaction line based on the extracted entities using the AI-based matching model 326. At step 1606, the computer implemented method 1600 may further include predicting, by the processor 110, appropriate matches between the unmatched transaction line and the input data file by applying the generated transaction label onto the AI-based matching model 326. Steps 1602-1606 are explained in detail in conjunction with the event identification module 306 in FIG. 3, therefore repeated description is omitted for sake of brevity.

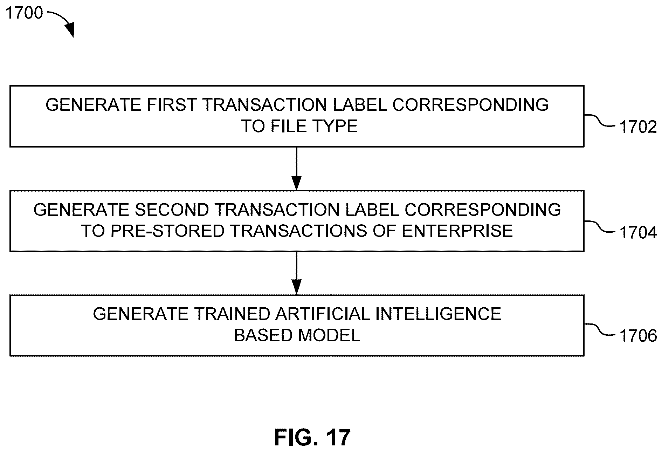

FIG. 17 illustrates a flow diagram that presents an example computer implemented method 1700 for generating the AI-based matching model 326, in accordance with implementations of the present disclosure. FIG. 17 is explained in conjunction with FIGS. 1-16.

At step 1702, the computer implemented method 1700 may include generating, by the processor 110, a first transaction label corresponding to the identified file type. At step 1704, the computer implemented method 1700 may include generating, by the processor 110, a second transaction label corresponding to pre-stored transactions of the enterprise. At step 1706, the computer implemented method 1700 may further include generating, by the processor 110, the AI based-matching model 326 based on the generated first transaction label, the generated second transaction label and time series data of the extracted entities. Steps 1702-1706 are explained in detail in conjunction with FIG. 13, therefore repeated description is omitted for sake of brevity.

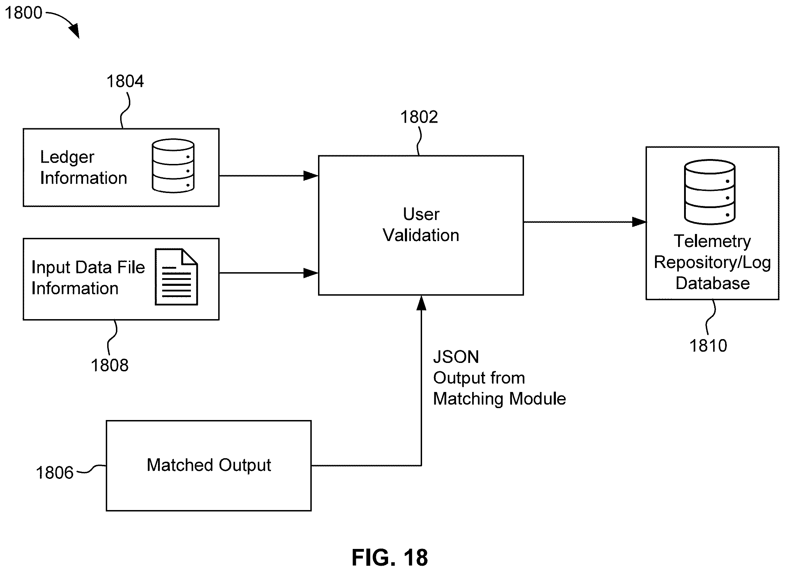

FIG. 18 illustrates an example illustration 1800 of validating ledger entries against corresponding input data files (e.g., supporting documents) by providing an interactive interface for comparison, in accordance with implementations of the present disclosure. FIG. 18 is explained in conjunction with FIGS. 1-17.

A user validation 1802 may be performed based on ledger information 1804 (information associated with the ledger) and a matched output 1806 generated by the event identification module 306 using the AI-based matching model 326. A side-by-side view of the ledger information 1804 and the matched output 1806 may be presented to a user on a user interface of the user device 106. The ledger information 1804, which includes line items extracted from the ledger or statement, is displayed on a left side of the user interface. On the right side, results of an automatic match between the ledger entries and input data file information 1808 may be presented. Each line item may be color-coded to indicate a match quality. For example, a green color indicates a perfect match, an amber color indicates a partial match, and/or a red color indicates no match.

When the user selects a line item form the ledger, the user may be able to view content from the input data file that corresponds to that line item. Relevant portion of the input data file, either in a pop-up window or directly on screen of the user interface may be displayed, depending on size of the content. The display of the relevant portion of the input data file allows the user to cross-check the ledger information 1804with the input data file information 1808, ensuring the match is accurate. If the user identifies a discrepancy that the match is incorrect, the user may be provided with an option to override the suggested match. The user may browse through a list of files associated with a specific account and select the input data file and a page that includes correct data. Additionally, the user may provide comments explaining decision to override the matched output 1806. The comments and actions provided by the user may be stored in a telemetry repository or log database 1810 (similar to the log database 222) as part of telemetry data. The telemetry data, including feedback from the user and reasoning for overriding the matched output 1806, is invaluable for continuously improving the AI-based matching model 326 of the backup validation system 102. The feedback may be used to fine-tune the AI-based matching model 326, allowing the AI-based matching model 326 to learn from user input or feedback and enhance performance over time. By combining ML predictions with human validation, the backup validation system 102 creates a feedback loop that optimizes accuracy of the matching process.

FIG. 19 illustrates a flow diagram that presents an example computer implemented method 1900 for validating the identified transaction event corresponding to the entities, in accordance with implementations of the present disclosure. The validation may be performed based on user feedback and/or the Gen AI-based validation model 328. In some implementations, the computer implemented method 1900 may be executed by the validation module 308, as described in relation to FIG. 3.

At step 1902, the computer implemented method 1900 may include generating, by the processor 110, a confidence score for each of the identified transaction event by applying the identified transaction event to the Gen AI-based validation model 328 along with the user feedback. At step 1904, the computer implemented method 1900 may include mapping, by the processor 110, the generated confidence score for each of the identified transaction event with a pre-determined threshold value. At step 1906, the computer implemented method 1900 may further include validating, by the processor 110, the identified transaction event based on the mapping. The results of validation may include a positive result indicating that the generated confidence score maps with the pre-determined threshold value and a negative result indicating that the generated confidence score fails to map with the pre-determined threshold value. Steps 1902-1906 are explained in detail in conjunction with the validation module 308 in FIG. 3, therefore repeated description is omitted for sake of brevity.

FIG. 20 illustrates a flow diagram that presents an example computer implemented method 2000 for determining a change in the identified transaction event, the extracted entities, and/or the identified file type, in accordance with implementations of the present disclosure. In some implementations, the computer implemented method 2000 may be executed by the change determination module 310, as described in relation to FIG. 3.

At step 2002, the computer implemented method 2000 may include obtaining, by the processor 110, the user feedback corresponding to the identified transaction event, the extracted entities, and the identified file type. The user feedback may include user recommendations, user preferences, and/or user modifications. At step 2004, the computer implemented method 2000 may include comparing, by the processor 110, the identified transaction event, the extracted entities, and the identified file type with the obtained user feedback using the Gen AI-based validation model 328. At step 2006, the computer implemented method 2000 may further include determining, by the processor 110, the change in the identified transaction event, the extracted entities, and/or the identified file type based on the comparison. Steps 2002-2006 are explained in detail in conjunction with the change determination module 310 in FIG. 3, therefore repeated description is omitted for sake of brevity.

FIG. 21 illustrates an example illustration 2100 of collecting telemetry data using the logging system 210, in accordance with implementations of the present disclosure. FIG. 21 is explained in conjunction with FIGS. 1-20.

Key information including a final output 2102 submitted by a user, a matching output 2104, and an entity extraction output 2106 may be collected by the telemetry collector 220. The collected data (including the final output 2102, the matching output 2104, and the entity extraction output 2106) serves as a foundation for assessing accuracy of the backup validation system 102 and identifying areas for improvement. The final output 2102 submitted by the user is information validated and confirmed by the user, reflecting any changes or adjustments the user made to the suggestions or outputs (e.g., the identified transaction event) of the backup validation system 102. The matching output 2104 is a result generated by the event identification module 306, which provides an initial automated suggestion on how ledger information aligns with an input data file. The entity extraction output 2106 is an output generated by the entity extraction module 304, identifying appropriate entities within the input data file.

By comparing the final output 2102 with the matching output 2104, the backup validation system 102 determines whether the user agrees with the suggestions or the outputs of the backup validation system 102 or has identified inaccuracies. If the user modifies the input data file or a page identified by the event identification module 306, the modification is categorized as an inaccuracy, which is crucial for improving AI-based matching model 326 used by the event identification module 306. User feedback (e.g., modifications performed by the user) is used for continuous learning to enhance matching performed by the event identification module 306, either by improving the AI-based matching model 326 or adding new matching rules manually.

Similarly, if the user provides comments on the entity extraction output 2106, particularly when changing a file suggested by the backup validation system 102, the user feedback (user provided comments) is used to fine-tune Gen AI prompts generated for entity extraction, which allows the backup validation system 102 to adjust entity identification rules and improve future extractions.

All collected telemetry data, including the user feedback, the changes made to any of the outputs, and/or any additional comments, is stored in a telemetry repository or the log database 222. The backup validation system 102 leverages the telemetry data to improve accuracy and performance of both the event identification module 306 and the entity extraction module 304, ensuring that the backup validation system 102 evolves over time to meet user expectations more effectively. The telemetry data is then analyzed and used to generate accuracy metrics 2108, which may be displayed on the dashboard 224 of logging system 210 or an application associated with the logging system 210. The dashboard 224 provides visual insights into performance of the matching and entity extraction, allowing stakeholders to track improvements and identify areas requiring further refinement.

Implementations of the present disclosure provide technical solutions to multiple technical problems that arise in the context of performing backup validation. Implementations of the present disclosure enable performing the backup validation with improved accuracy, and with reduced amount of time and utilization of computing resources.

In the present disclosure, the backup validation may be performed by extracting entities from input data files (e.g., supporting documents) associated with various file types, identifying transaction events corresponding to the extracted entities, validating the identified transaction events to determine any change in the transaction events, and modifying the transaction events, the entities, and the file types based on the change. The input data files (e.g., supporting documents) associated with various file types may be identified and preprocessed (e.g., by standardizing the input data files) using a combination of rule-based and Gen AI models, which may eliminate inconsistencies in handling the supporting documents that may further aid in improving speed and reliability of the backup validation. Further, with the usage of the combination of rule-based and Gen AI models, diverse file types associated with the input data files may be identified without constantly training the rule-based and Gen AI models, while reducing costs and utilization related to storage, computing resources, and/or the like, and reducing AI expert interventions in identifying the file types. The entities from the preprocessed input data files may be efficiently and accurately extracted using AI based matching, which may automatically align ledger items with the input data files. The transaction events may be matched by employing both 1:1 and n:n matching methods, which may reduce a requirement of manual review. Further, confidence scoring based mechanisms may be used to validate the identified transaction events, which may enable flagging of only the transaction events with low-confidence scores. Therefore, a speed of performing the backup validation may be improved by minimizing errors and inconsistencies in the validation.

Implementations of the present disclosure may further enable performing the backup validation by dynamically adapting to evolving requirements of enterprises, which may improve scalability and reliability of the backup validation. In addition, implementations of the present disclosure may facilitate refinement of the rule-based and Gen AI models by continuously capturing feedback on the performed backup validation, which may enhance overall accuracy and adaptability of the backup validation. Therefore, the present disclosure may ensure a more accurate, scalable, and efficient backup validation with reduced reliance on human oversight.

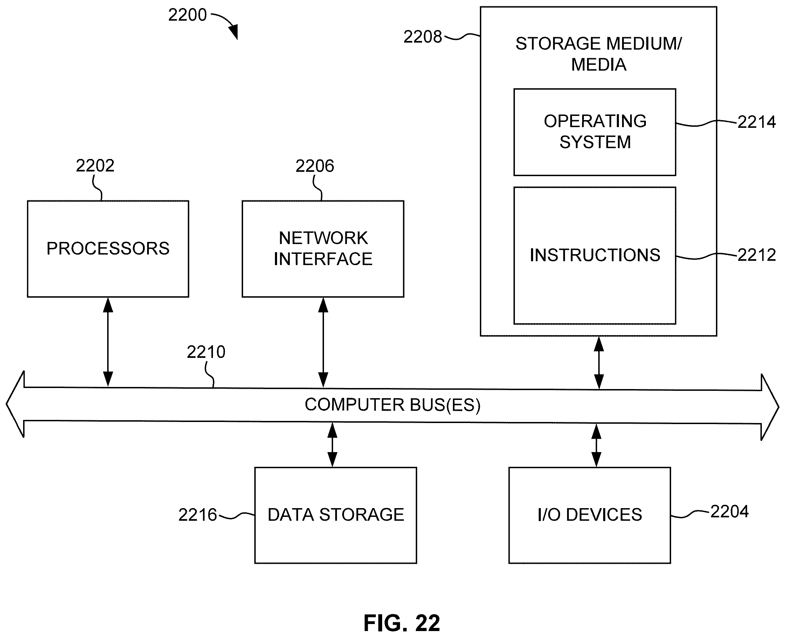

FIG. 22 depicts a computer system 2200 that may be used to implement the backup validation system 102. More particularly, computing machines such as desktops, laptops, smartphones, tablets, and wearables which may be used for backup validation for enterprises. The computer system 2200 may include additional components not shown and that some of the process components described may be removed and/or modified. In another example, the computer system 2200 may be deployed on external-cloud platforms such as cloud, internal corporate cloud computing clusters, organizational computing resources, and/or the like.

The computer system 2200 includes processor(s) 2202, such as a central processing unit, an application specific integrated circuit (ASIC) or another type of processing circuit, input/output devices 2204, such as a display, mouse keyboard, etc., a network interface 2206, such as a Local Area Network (LAN), a wireless 802.11x LAN, a 3G or 4G or 5G mobile WAN or a WiMax WAN, and a storage medium/media 2208. Each of these components may be operatively coupled to a computer bus 2210. The storage medium/media 2208 may be any suitable medium that participates in providing instructions to the processor(s) 2202 for execution. For example, the storage medium/media 2208 may be non-transitory or non-volatile medium, such as a magnetic disk or solid-state non-volatile memory or volatile medium such as RAM. The instructions or modules stored on the storage medium/media 2208 may include machine-readable instructions 2212 executed by the processor(s) 2202 that cause the processor(s) 2202 to perform the methods and functions of the backup validation system 102.

The backup validation system 102 may be implemented as software stored on a non-transitory processor-readable medium and executed by the processor(s) 2202. For example, the storage medium/media 2208 may store an operating system 2214, such as MAC OS, MS WINDOWS, UNIX, or LINUX, and code, for the backup validation system 102. The operating system 2214 may be multi-user, multiprocessing, multitasking, multithreading, real-time, and the like. For example, during runtime, the operating system 2214 is running and the code for the backup validation system 102 is executed by the processor(s) 2202.

The computer system 2200 may include a data storage 2216, which may include non-volatile data storage. The data storage 2216 stores any data used or generated by the backup validation system 102.

The network interface 2206 connects the computer system 2200 to internal systems for example, via a LAN. Also, the network interface 2206 may connect the computer system 2200 to the Internet. For example, the computer system 2200 may connect to web browsers and other external applications and systems via the network interface 2206.

What has been described and illustrated herein is an example along with some of its variations. The terms, descriptions, and figures used herein are set forth by way of illustration only and are not meant as limitations. Many variations are possible within the spirit and scope of the subject matter, which is intended to be defined by the following claims and their equivalents.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products (i.e., one or more modules of computer program instructions encoded on a computer readable medium for execution by, or to control the operation of, data processing apparatus). The computer readable medium may be a machine-readable storage device, a machine-readable storage substrate, a memory device, a composition of matter effecting a machine-readable propagated signal, or a combination of one or more of them. The term "computing system" encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC).

Processors suitable for the execution of a computer program include, by way of example, both general and special purpose microprocessors, and any one or more processors of any appropriate kind of digital computer. Generally, a processor will receive instructions and data from a read only memory or a random-access memory or both. Elements of a computer may include a processor for performing instructions and one or more memory devices for storing instructions and data. Generally, a computer also includes or is operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor(s) 2202 and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touch-pad), by which the user may provide input to the computer. Other kinds of devices may be used to provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a local area network ("LAN") and a wide area network ("WAN"), e.g., the Internet.

The computing system may include clients and servers. A client and server are generally remote from each other and interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

A number of implementations have been described. Nevertheless, it will be understood that various modifications may be made without departing from the spirit and scope of the disclosure. For example, various forms of the flows shown above may be used, with steps reordered, added, or removed. Accordingly, other implementations are within the scope of the following claims.

## Claims

1. A system comprising:
a processor; and
a memory communicatively coupled to the processor, wherein the memory comprises processor-executable instructions which, when executed by the processor, cause the processor to:
receive at least one input data file corresponding to a plurality of transactions of an enterprise from a plurality of data sources;
identify a file type of the received at least one input data file using on at least one of a rule-based model and a Generative Artificial Intelligence (Gen AI)-based file type model;
extract a plurality of entities from the at least one input data file, based on the identified file type and using at least one of the rule-based model and a Gen AI-based entities model;
identify a transaction event corresponding to the extracted plurality of entities by mapping the extracted plurality of entities with at least one entity comprised in a pre-stored file using an AI-based matching model;
validate the identified transaction event based on at least one of user feedback and a Gen AI-based validation model;
determine a change in at least one of the identified transaction event, the extracted plurality of entities, and the identified file type based on results of validation;
modify at least one of the identified transaction event, the extracted plurality of entities, and the identified file type based on the determined change; and
output the modified transaction event corresponding to the received at least one input data file on a user interface of a user device.

2. The system of claim 1, wherein the processor is configured to:
continuously learn the determined change in the at least one of the identified transaction event, the extracted plurality of entities, and the identified file type based on the user feedback; and
dynamically update the AI-based matching model based on the learnt change;
and/or
wherein to identify the file type of the received at least one input data file, the processor is configured to:
identify a file format associated with the received at least one input data file based on a file extension and using a data extraction model;
extract a text corresponding to the identified file format;
pre-process the extracted text to generate a common data format;
generate a Gen AI prompt corresponding to the generated common data format and the extracted text; and
identify the file type of the received at least one input data file by executing the generated Gen AI prompt on the rule-based model and the Gen AI-based file type model.

3. The system of claim 1 or 2, wherein to extract the plurality of entities from the input data file based on the identified file type, the processor is configured to:
identify the plurality of entities from at least one entity library based on the identified file type and a type of account associated with the file type;
generate a Gen AI prompt corresponding to the identified plurality of entities and an extracted text;
extract appropriate entities corresponding to the file type from among the identified plurality of entities by executing the generated Gen AI prompt on the rule-based model and the Gen AI-based entities model; and
determine a location associated with the extracted appropriate entities based on a pre-stored file location.

4. The system of any one of the preceding claims, wherein to identify the transaction event corresponding to the extracted entities, the processor is configured to:
identify a match between at least one transaction line item from a ledger and a corresponding line item in the extracted plurality of entities based on predefined matching rules, wherein the predefined matching rules comprise at least one threshold-based rule;
generate a combination of rows from the extracted plurality of entities to identify a match for each transaction line item from the ledger, wherein number of rows in each combination corresponds to a predetermined maximum value;
compare each transaction line item with each probable combination of rows within the received input data file;
identify the transaction event corresponding to the extracted plurality of entities based on the comparison and the identified match between the at least one transaction line item; and
filter matched rows within the received input data file from subsequent iterations based on the identified transaction event.

5. The system of any one of the preceding claims, wherein to identify the transaction event corresponding to the extracted entities, the processor is configured to:
determine at least one unmatched transaction line item from the extracted plurality of entities based on the comparison;
generate a transaction label for each of the determined at least one unmatched transaction line based on the extracted plurality of entities using the AI-based matching model; and
predict appropriate matches between the determined at least one unmatched transaction line and the received input data file by applying the generated transaction label onto the AI-based matching model.

6. The system of any one of the preceding claims, wherein the processor is configured to:
generate the AI-based matching model by:
generating a first transaction label corresponding to the identified file type;
generating a second transaction label corresponding to plurality of pre-stored transactions of the enterprise; and
generating the AI-based matching model based on the generated first transaction label, the generated second transaction label and time series data of the extracted plurality of entities;
wherein, optionally,
the processor is configured to:
continuously re-train the AI-based matching model based on the user feedback.

7. The system of any one of the preceding claims, wherein to validate the identified transaction event based on at least one of user feedback and the Gen AI-based validation model, the processor is configured to:
generate a confidence score for each of the identified transaction event by applying the identified transaction event to the Gen AI-based validation model along with the user feedback;
map the generated confidence score for each of the identified transaction event with a pre-determined threshold value; and
validate the identified transaction event based on the mapping, wherein the results of validation comprises a positive result indicating that the generated confidence score maps with the pre-determined threshold value and a negative result indicating that the generated confidence score fails to map with the pre-determined threshold value;
and/or
wherein to determine the change in the at least one of the identified transaction event, the extracted plurality of entities, and the identified file type, the processor is configured to:
obtain the user feedback corresponding to the identified transaction event, the extracted plurality of entities, and the identified file type, wherein the user feedback comprises at least one of user recommendations, user preferences, and user modifications;
compare the identified transaction event, the extracted plurality of entities, and the identified file type with the obtained user feedback using the Gen AI-based validation model; and
determine the change in the at least one of the identified transaction event, the extracted plurality of entities, and the identified file type based on the comparison.

8. A method comprising:
receiving, by a processor, at least one input data file corresponding to a plurality of transactions of an enterprise from a plurality of data sources;
identifying, by the processor, a file type of the received at least one input data file based on at least one of a rule-based model and a Generative Artificial Intelligence (Gen AI)-based file type model;
extracting, by the processor, a plurality of entities from the identified file type based on at least one of the rule-based model and a Gen AI-based entities model;
identifying, by the processor, a transaction event corresponding to the extracted plurality of entities by mapping the extracted plurality of entities with at least one entity comprised in a pre-stored file using an AI-based matching model;
validating, by the processor, the identified transaction event based on at least one of user feedback and the Gen AI-based validation model;
determining, by the processor, a change in at least one of the identified transaction event, the extracted plurality of entities, and the identified file type based on results of validation;
modifying, by the processor, at least one of the identified transaction event, the extracted plurality of entities, and the identified file type based on the determined change; and
outputting, by the processor, the modified transaction event corresponding to the received at least one input data file on a user interface of a user device.

9. The method of claim 8, further comprising:
continuously learning, by the processor, the determined change in the at least one of the identified transaction event, the extracted plurality of entities, and the identified file type based on the user feedback; and
dynamically updating, by the processor, the AI-based matching model based on the learnt change;
and/or
wherein identifying the file type of the received at least one input data file comprises:
identifying, by the processor, a file format associated with the received at least one input data file based on a file extension and using a data extraction model;
extracting, by the processor, a text corresponding to the identified file format;
pre-processing, by the processor, the extracted text to generate a common data format;
generating, by the processor, a Generative AI (Gen AI) prompt corresponding to the generated common data format and the extracted text; and
identifying, by the processor, the file type of the received at least one input data file by executing the generated Gen AI prompt on the rule-based model and the Gen AI-based file type model.

10. The method of claim 8 or 9, wherein extracting the plurality of entities from the identified file type comprises:
identifying, by the processor, the plurality of entities from at least one entity library based on the identified file type and a type of account associated with the file type;
generating, by the processor, a Generative AI (Gen AI) prompt corresponding to the identified plurality of entities and an extracted text;
extracting, by the processor, appropriate entities corresponding to the file type from among the identified plurality of entities by executing the generated Gen AI prompt on the rule-based model and the Gen AI-based entities model; and
determining, by the processor, a location associated with the extracted appropriate entities based on a pre-stored file location.

11. The method of any one of claims 8 to 10, wherein identifying the transaction event corresponding to the extracted entities comprises:
identifying, by the processor, a match between at least one transaction line item from a ledger and a corresponding line item in the extracted plurality of entities based on predefined matching rules, wherein the predefined matching rules comprise at least one threshold-based rule;
generating, by the processor, a combination of rows from the extracted plurality of entities to identify a match for each transaction line item from the ledger, wherein number of rows in each combination corresponds to a predetermined maximum value;
comparing, by the processor, each transaction line item with each probable combination of rows within the received input data file;
identifying, by the processor, the transaction event corresponding to the extracted plurality of entities based on the comparison and the identified match between the at least one transaction line item; and
filtering, by the processor, matched rows within the received input data file from subsequent iterations based on the identified transaction event.

12. The method of any one of claims 8 to 11, wherein identifying the transaction event corresponding to the extracted entities comprises:
determining, by the processor, at least one unmatched transaction line item from the extracted plurality of entities based on the comparison;
generating, by the processor, a transaction label for each of the determined at least one unmatched transaction line based on the extracted plurality of entities using the Gen AI-based matching model; and
predicting, by the processor, appropriate matches between the determined at least one unmatched transaction line and the received input data file by applying the generated transaction label onto the Gen AI-based matching model.

13. The method of any one of claims 8 to 12, further comprising:
generating, by the processor, the Gen AI-based matching model by:
generating, by the processor, a first transaction label corresponding to the identified file type;
generating, by the processor, a second transaction label corresponding to plurality of pre-stored transactions of the enterprise; and
generating, by the processor, the Gen AI-based matching model based on the generated first transaction label, the generated second transaction label and time series data of the extracted plurality of entities.

14. The method of any one of claims 8 to 13, wherein validating the identified transaction event based on at least one of user feedback and the Gen AI-based validation model comprises:
generating, by the processor, a confidence score for each of the identified transaction event by applying the identified transaction event to the Gen AI-based validation model along with the user feedback;
mapping, by the processor, the generated confidence score for each of the identified transaction event with a pre-determined threshold value; and
validating, by the processor, the identified transaction event based on the mapping, wherein the results of validation comprises a positive result indicating that the generated confidence score maps with the pre-determined threshold value and a negative result indicating that the generated confidence score fails to map with the pre-determined threshold value;
and/or
wherein determining the change in the at least one of the identified transaction event, the extracted plurality of entities, and the identified file type comprises:
obtaining, by the processor, the user feedback corresponding to the identified transaction event, the extracted plurality of entities, and the identified file type, wherein the user feedback comprises at least one of user recommendations, user preferences, and user modifications;
comparing, by the processor, the identified transaction event, the extracted plurality of entities, and the identified file type with the obtained user feedback using the Gen AI-based validation model; and
determining, by the processor, the change in the at least one of the identified transaction event, the extracted plurality of entities, and the identified file type based on the comparison.

15. A non-transitory computer-readable medium comprising a processor-executable instructions that cause a processor to:
receive at least one input data file corresponding to a plurality of transactions of an enterprise from a plurality of data sources;
identify a file type of the received at least one input data file based on at least one of a rule-based model and a Generative Artificial Intelligence (Gen AI)-based file type model;
extract a plurality of entities from the identified file type based on at least one of the rule-based model and a Gen AI-based entities model;
identify a transaction event corresponding to the extracted plurality of entities by mapping the extracted plurality of entities with at least one entity comprised in a pre-stored file using an AI-based matching model;
validate the identified transaction event based on at least one of user feedback and the Gen AI-based validation model;
determine a change in at least one of the identified transaction event, the extracted plurality of entities, and the identified file type based on results of validation;
modify at least one of the identified transaction event, the extracted plurality of entities, and the identified file type based on the determined change; and
output the modified transaction event corresponding to the received at least one input data file on a user interface of a user device.
